Europäisches Patentamt

European Patent Office

Office européen des brevets

(11) Veröffentlichungsnummer : **0 159 693**
**B1**

(12) **EUROPÄISCHE PATENTSCHRIFT**

(45) Veröffentlichungstag der Patentschrift :.
11.01.89

(51) Int. Cl.⁴ : **B 23 K 11/30**

(21) Anmeldenummer : 85104897.5

(22) Anmeldetag : 22.04.85

(54) Verfahren zur mehrfachen Nutzung eines als Elektrodendraht zum elektrischen Widerstandslängsnahtschweissen verwendeten Kupferdrahtes.

(30) Priorität : 24.04.84 CH 2029/84

(43) Veröffentlichungstag der Anmeldung :
30.10.85 Patentblatt 85/44

(45) Bekanntmachung des Hinweises auf die Patenterteilung : 11.01.89 Patentblatt 89/02

(84) Benannte Vertragsstaaten :
AT BE CH DE FR GB IT LI NL SE

(56) Entgegenhaltungen :
GB--A-- 1 569 060
US--A-- 2 838 651
US--A-- 3 102 945

(73) Patentinhaber : ELPATRONIC AG
Baarerstrasse 117
CH-6300 Zug (CH)

(72) Erfinder : Weil, Wolfgang Hermann
Hattsteinstrasse 3
D-7843 Heitersheim (DE)
Erfinder : Fankhauser, Hanspeter
32, Hamilton Road
Irvington, N.Y. 10533 (US)

(74) Vertreter : Hotz, Klaus, Dipl.-El.-Ing. / ETH
c/o SOUDRONIC AG Industriestrasse 35 Postfach 11
CH-8962 Bergdietikon (CH)

**Beschreibung**

Die Erfindung bezieht sich auf ein Verfahren zur mehrfachen Nutzung eines Kupferdrahtes, der in einer ersten Nutzanwendung als Elektrodendraht zum elektrischen Widerstandslängsnahtschweissen, insbesondere von verzinnten Blechen, verwendet und hierzu vor dieser ersten Nutzanwendung zu einem Draht mit von der Kreisform abweichender Querschnittsform, insbesondere zu einem Flachdraht, verformt und mit der Verformung verfestigt wird und der bei dieser ersten Nutzanwendung in seinen mit dem Schweissgut in Kontakt kommenden Bereichen durch von dem Schweissgut stammendes und während der Schweissung auf ihn übergehendes Material verunreinigt wird.

Schon bei den ersten bekanntgewordenen Versuchen zum elektrischen Widerstandslängsnahtschweissen von verzinnten Blechen unter Verwendung von Kupferdraht als Elektrodendraht hatte man in Betracht gezogen, den als Elektrodendraht verwendeten Kupferdraht mehrfach zu benutzen.

So ist beispielsweise bei dem in der US-PS 2 838 651 beschriebenen ersten erfolglosen Versuch zum elektrischen Widerstandslängsnahtschweissen von verzinnten Blechen unter Verwendung eines Elektrodendrahtes, der den Kontakt zwischen Elektrodenrolle und Schweissgut herstellt und dadurch eine Verunreinigung der Elektrodenrollen durch von dem Schweissgut stammendes Zinn verhindert, bereits daran gedacht worden, den mit dem Schweissgut in Kontakt gekommenen und dabei durch vom Schweissgut auf ihn übergegangenes Zinn verunreinigten Elektrodendraht von diesen Verunreinigungen zu befreien und danach erneut in der gleichen Schweissmaschine als Elektrodendraht zu benutzen (US-PS 2 838 651, Sp. 4, Z. 39-54). Dabei war dort in Erwägung gezogen worden, die Verunreinigungen dadurch von dem Elektrodendraht zu entfernen, dass der Elektrodendraht durch eine Kalibrierdüse mit einem ein wenig kleineren Durchmesser als seinem ursprünglichen Drahtdurchmesser hindurchgeführt wird, « so dass eine dünne Oberflächenschicht des Drahtes durch die Düse entfernt wird und dadurch die Entfernung von irgendwelchem Fremdmaterial von dem Draht sichergestellt wird (US-PS 2 838 651, Sp. 4, Z. 43-45) ».

Tatsächlich konnte aber das in der US-PS 2 838 651 beschriebene Verfahren aus einer ganzen Reihe von Gründen nicht in die Praxis umgesetzt werden. Der hauptsächliche Grund dafür war, dass der Elektrodendraht beim Passieren der Schweissstelle unter dem Druck der Elektrodenrollen abgewalzt wird und sich dabei verlängert (der Effekt des Abwalzens des Elektrodendrahtes und der sich daraus ergebenden Drahtverlängerung ist z. B. aus der CH-PS 436 513 bekannt und konnte erst über 10 Jahre nach der Veröffentlichung der US-PS 2 838 651 durch die z. B. in der CH-PS 536 163 beschriebenen Massnahmen überwunden werden), denn die Drahtverlängerung infolge des Abwalzens unter der ersten der beiden Elektrodenrollen, die der Elektrodendraht bei dem Verfahren nach der US-PS 2 838 651 zu passieren hat, hat in Verbindung mit der Bedingung, dass der Elektrodendraht beim Passieren beider Elektrodenrollen die gleiche Geschwindigkeit haben muss (US-PS 2 838 651, Sp. 4, Z. 9-13) zur Folge, dass sich in der Drahtschleife zwischen erster und zweiter Elektrodenrolle eine Schlaufe bildet, die praktisch zur Funktionsunfähigkeit des Verfahrens nach der US-PS 2 838 651 führt (der Effekt des Abwalzens und der daraus resultierenden Schlaufenbildung, konnte wie schon erwähnt erst wesentlich später durch die Massnahmen der CH-PS 536 163 überwunden werden). Abgesehen von der generellen Funktionsunfähigkeit des in der US-PS 2 838 651 beschriebenen Verfahrens infolge des besagten Abwalzens des Elektrodendrahtes hätte aber auch das beabsichtigte Hindurchführen des Elektrodendrahtes durch die genannte Kalibrierdüse nicht zu dem gewünschten Erfolg geführt. Denn die Abwalzung des Elektrodendrahtes unter dem Druck der Elektrodenrollen führt ja dazu, dass diejenigen Bereiche des Elektrodendrahtes, die mit dem Schweissgut in Kontakt kommen und daher mit Zinn verunreinigt werden, gleichzeitig auch die Bereiche sind, die abgewalzt und damit abgeflacht werden. Wenn nun, wie oben ausgeführt, durch die Düse eine dünne Oberflächenschicht des Drahtes entfernt wird, dann werden die abgewalzten und damit abgeflachten Randbereiche des Elektrodendrahtes bei diesem Entfernen nicht mit erfasst, weil ihr Abstand von der Drahtachse bzw. dem Drahtzentrum geringer als der Abstand der übrigen Randbereiche des Drahtes nach Entfernung der dünnen Oberflächenschicht ist, so dass gerade in denjenigen Randbereichen des Elektrodendrahtes, die mit Zinn verunreinigt sind, die Verunreinigungen beim Hindurchführen des Elektrodendrahtes durch die Kalibrierdüse nicht entfernt werden. Ausserdem ist natürlich auch der generelle Gedanke, einen in einer Schweissmaschine zum Widerstandslängsnahtschweissen benutzten Elektrodendraht nach seiner Benutzung durch Verringerung seines Durchmessers in der gleichen Schweissmaschine wiederbenutzbar zu machen, in der Praxis überhaupt nicht realisierbar, weil der Elektrodendraht mit einer relativ grossen Oberfläche an der Elektrodenrolle anliegen muss, damit der Kontaktwiderstand zwischen Elektrodenrolle und Elektrodendraht möglichst gering und somit ein Anschweissen des Elektrodendrahtes an der Elektrodenrolle ausgeschlossen wird, und eine solche relativ grosse Kontaktfläche zwischen Elektrodendraht und Elektrodenrolle ist nur dann erreichbar, wenn der Elektrodendraht in die für ihn vorgesehene Nut in der Elektrodenrolle genau hineinpasst und daher mit seinen innerhalb der Nut liegenden Randbereichen satt an den Nutwänden anliegt, wenn also der Krümmungsradius der Nutwände gleich dem Elektrodendrahtradius ist, und diese Bedingung ist natürlich mit einem verringerten Durchmesser des Elektrodendrahtes nicht mehr erfüllt, d. h. die durch die Kalibrierdüse bewirkte Verringerung des Durchmessers des Elektrodendrahtes führt dazu, dass der Elektrodendraht nicht mehr flächenförmig sondern nur noch linienförmig an der für ihn vorgesehenen Nut in der Elektrodenrolle anliegt und sich dadurch ein zu grosser Kontaktwiderstand zwischen Elektrodenrolle und Elektrodendraht und damit die Gefahr des Anschweissens des Elektrodendrahtes an der Elektrodenrolle ergibt. Hinzu kommt noch, dass sich bei verringertem Elektrodendrahtdurchmesser gleichzeitig auch eine schlechtere Führung des Drahtes in der Elektrodenrolle vorgesehenen Nut ergibt, was zu einem Herunterspringen des Drahtes von der Elektrodenrolle beim Schweissbetrieb führen kann.

Aus all diesen Gründen war der in der US-PS 2 838 651 geäusserte Gedanke einer mehrfachen Benutzung des Elektrodendrahtes in der gleichen Schweissmaschine in der Praxis nicht realisierbar und konnte bei fachmännischer Prüfung auch keine Anregung zu einer solchen mehrfachen Nutzung vermitteln.

Auch die später in der CH-PS 370 175 (S. 2, Z. 22-41) nochmals in Betracht gezogene mehrfache Benutzung von Elektrodendrähten in einer zum Widerstandslängsnahtschweissen von verzinnten Blechen dienenden Schweissmaschine erwies sich als praktisch nicht realisierbar. Zwar hatte man dort keine Durchmesserverringerung sondern lediglich eine Reinigung der Elektrodendrähte nach jedem Durchgang vorgesehen, so dass also die oben im Zusammenhang mit dem Verfahren nach der US-PS 2 838 651 erwähnten, mit der Durchmesserverringerung des Elektrodendrahtes entstehenden Probleme nicht auftraten, aber diese Reinigung führte auch nicht zu dem gewünschten Erfolg, dass solche schon benutzten, gereinigten Elektrodendrähte zu auch nur annähernd gleich guten Schweissergebnissen wie Neudrähte geführt hätten. Die Gründe dafür lagen nicht nur in den angewandten Reinigungsmethoden sondern waren zum grossen Teil systembedingt, d. h. von prinzipieller Natur. Bei den angewandten Reinigungsmethoden war das hauptsächlich in Betracht gezogene Verfahren, die Elektrodendrähte nach ihrer Benutzung durch eine Reinigungsblende zu ziehen, mit der « die den Drähten in Form von Zinnteilen anhaftenden Unreinigkeiten abgestreift werden (CH-PS 370 175, S. 2, Z. 27-30) », schon deswegen ungeeignet, weil sich das anhaftende Zinn im kalten Zustand natürlich nicht einfach abstreifen lässt und daher nur eine sehr unvollkommene Entfernung des Zinns von den Drahtoberflächen mittels dieser Reinigungsblenden möglich war, die dem Draht keineswegs eine mit einem Neudraht vergleichbare Oberflächenbeschaffenheit verleihen konnte. Auch die weiter in Betracht gezogene chemische Reinigungsmethode einer Ablösung des Zinnes von der Drahtoberfläche mittels verdünnter Salzsäure oder verdünnter Natronlauge (CH-PS 370 175, S. 2, Z. 35-38) war praktisch schon aus dem Grunde nicht durchführbar, weil eine solche chemische Ablösung viel zu lange gedauert hätte und ausserdem die Salzsäure bzw. Natronlauge auch die nicht oder nur schwach mit Zinn bedeckten Oberflächenbereiche des Drahtes angegriffen hätte und damit zu einer nicht akzeptierbaren Drahtbruchgefahr an stark angegriffenen Drahtstellen geführt hätte. Dagegen schien die ebenfalls in Betracht gezogene Methode einer Reinigung durch Abschmelzen des Zinns von dem benutzten Elektrodendraht (CH-PS 370 175, S. 2, Z. 38-41), z. B. mittels Hindurchführung des benutzten Elektrodendrahtes durch ein Zinnbad sowie eine am Ausgang desselben angeordnete zum Abstreifen des flüssigen Zinnes dienende Blende, zunächst vielversprechend zu sein, weil sich damit eine zumindest ähnlich gute Oberflächenbeschaffenheit des benutzten Elektrodendrahtes wie bei einem verzinnten Neudraht erreichen lässt. Es stellte sich aber dann doch heraus, dass auch diese Form der « Reinigung » nicht zu einem wiederbenutzbaren Elektrodendraht führt, mit dem ähnlich gute Schweissergebnisse wie mit einem (unverzinnten) Neudraht erzielbar sind. Der Grund dafür liegt darin, dass das beim Schweissen auf den Elektrodendraht übergehende Zinn nicht nur oberflächlich an dem Kupferdraht anhaftet sondern auch unter Legierungsbildung in die an der Oberfläche gelegenen Kupferschichten eindringt und die dadurch entstehende Kupfer-Zinn-Legierung in den Oberflächenschichten des Drahtes einen spezifischen Widerstand hat, der ein Vielfaches des spezifischen Widerstandes von Kupfer beträgt und sogar noch wesentlich über dem spezifischen Widerstand von Zinn liegt, der selbst schon das ca. 6,5-fache des spezifischen Widerstandes von Kupfer beträgt. Denn infolge dieses hohen spezifischen Widerstandes der beim Schweissen mit Elektrodendrähten entstehenden Kupfer-Zinn-Legierung in den Oberflächenschichten des Drahtes ergibt sich bei einer Wiederbenutzung des Drahtes eine ausserordentlich starke Erhitzung dieser Oberflächenschichten beim Durchfluss des Schweissstromes, die zum Anschweissen des Drahtes an dem Schweissgut führen kann und auf jeden Fall aber zu einer wesentlich schlechteren Schweissqualität als bei Verwendung eines Neudrahtes führt. Spätere Untersuchungen zeigten dann auch, dass dieser einer Wiederbenutzung des Elektrodendrahtes entgegenstehende Grund nicht nur bei der Reinigung durch Abschmelzen des Zinns sondern auch bei den anderen genannten Reinigungsmethoden von ausschlaggebender Bedeutung war, dass also auch bei sorgfältiger mechanischer oder chemischer Entfernung des an der Oberfläche eines benutzten Elektrodendrahtes anhaftenden Zinns infolge der Kupfer-Zinn-Legierung in den Oberflächenschichten des Drahtes keine guten Schweissergebnisse bei der Wiederbenutzung eines solchen sorgfältig gereinigten Elektrodendrahtes erzielbar sind und dass demgemäss die Bildung der Kupfer-Zinn-Legierung in den Oberflächenschichten eines Elektrodendrahtes beim Schweissen ein grundlegendes Hindernis für eine Wiederbenutzung von bereits benutztem Elektrodendraht ist. Ein weiterer Hinderungsgrund von prinzipieller Natur, der der in der CH-PS 370 175 in Betracht gezogenen Wiederbenutzung von schon benutzten, gereinigten Elektrodendrähten entgegenstand, war auch das schon erwähnte Abwalzen des Elektrodendrahtes unter dem Druck der Elektrodenrollen, weil dieses Abwalzen natürlich mit jeder weiteren Benutzung zu einer neuen, veränderten Querschnittsform des Elektrodendrahtes führt und zur Erzielung einer gleichbleibenden Schweissqualität gleichbleibende Verhältnisse und damit auch eine gleichbleibende Querschnittsform des benutzten Elektrodendrahtes unumgänglich sind, ganz abgesehen davon, dass solche Veränderungen der Querschnittsform natürlich auch ein Auswechseln der genannten für die Reinigung verwendeten Blenden nach jedem Durchgang zur Anpassung an die veränderte Querschnittsform des Drahtes erfordert hätten.

Aus den vorgenannten Gründen war daher auch die in der CH-PS 370 175 in Betracht gezogene Form einer mehrfachen Benutzung des Elektrodendrahtes in der gleichen Schweissmaschine praktisch nicht realisierbar.

Da sich somit schon in den ersten Jahren der praktischen Realisierung von Schweissmaschinen zum Widerstandslängsnahtschweissen von verzinnten Blechen mit Hilfe von Drahtelektroden herausgestellt hat, dass eine mehrfache Benutzung der Elektrodendrähte hauptsächlich wegen der genannten grundlegenden Hinderungsgründe der Bildung von Kupfer-Zinn-Legierungen in den Oberflächenschichten der Elektrodendrähte beim Schweissen und des Abwalzens der Elektrodendrähte unter dem Druck der Elektrodenrollen nicht möglich ist, blieb zur Vermeidung eines Verlustes des für die Elektrodendrähte verwendeten relativ teuren Kupfers keine andere Wahl, als die verunreinigten Drähte entsprechend der schon in der CH-PS 370 175 (S. 2, Z. 20/21) gegebenen Anregung nach ihrer einmaligen Benutzung einzuschmelzen und das geschmozene verunreinigte Kupfer in einem Raffinationsprozess von dem Zinn zu befreien, das mit den verunreinigten Drähten teils in Form einer Kupfer-Zinn-Legierung und teils in Form von an den Drähten anhaftendem Zinn in den Prozess eingebracht worden war.

In den ersten Jahren der praktischen Realisierung von Schweissmaschinen zum Widerstandslängsnahtschweissen von verzinnten Blechen mit Hilfe von Drahtelektroden erfolgte dabei das Sammeln der verunreinigten Elektrodendrähte nach ihrer einmaligen Benutzung dadurch, dass die benutzten Elektrodendrähte, wie z. B. aus der CH-PS 436 513 (Fig., Teil 44) ersichtlich, auf eine Spule aufgewickelt wurden. Diese Methode des Sammelns der benutzten Elektrodendrähte war aber für die vorgesehene Wiedergewinnung des Kupfers insofern nachteilig, als die Entfernung des Drahtes von der Spule in jedem Fall besondere Aufwendungen erforderte, nämlich entweder ein zeitaufwendiges Abwickeln des Drahtes von der Spule oder aber die Verwendung von speziellen zerlegbaren Spulen, die ein Abnehmen des gesamten Drahtwickels von der Spule gestatteten. Man ging daher nach einer gewissen Zeit dazu über, den benutzten Elektrodendraht nicht mehr auf eine Spule aufzuwickeln sondern, wie z. B. aus der CH-PS 519 961 (Sp. 2, Z. 14, u. Fig. 1) ersichtlich, den gebrauchten Draht zu stapeln, und zwar in sogenannten Behälterwicklern, wie sie z. B. aus der CH-PS 552 436 (Sp. 1, Z. 65-69, u. Fig. 1, Teil 37) bekannt sind. Da in der Zwischenzeit mit der Weiterentwicklung in der Drahtschweisstechnik (und insbesondere mit der in der CH-PS 536 163 beschriebenen Ueberwindung der oben schon erwähnten Schlaufenbildung beim Widerstandslängsnahtschweissen mit nur einem über beide Elektrodenrollen laufenden Elektrodendraht durch Verwendung eines vor dem Einlauf in die erste Elektrodenrolle durch Auswalzen verfestigten Hartdrahtes) auch die effektiven Schweissgeschwindigkeiten gegenüber denjenigen stark angestiegen waren, die zuvor bei dem in der CH-PS 436 513 beschriebenen Verfahren zum Widerstandslängsnahtschweissen mit nur einem über beide Elektrodenrollen laufenden Elektrodendraht, bei dem der benutzte Elektrodendraht auf eine Spule aufgewickelt worden war, erzielt worden waren und sich mit diesem Anstieg der effektiven Schweissgeschwindigkeiten natürlich auch der Anfall an gebrauchtem Draht pro Zeiteinheit wesentlich erhöht hatte, wurden auch entsprechend grosse Behälterwickler verwendet, die etwa die täglich anfallende Menge an gebrauchtem Draht aufnehmen konnten, und hier entstand dann im Zusammenhang mit der oben erwähnten Einschmelzung und Raffination das Problem, dass das von dem unregelmässig gestapelten Draht in dem Behälterwickler eingenommene Volumen wesentlich grösser als das eigentliche Kupfervolumen dieses Drahtes war und sich damit auch eine entsprechend unvollständige Ausnutzung des Volumens der zur Raffination eingesetzten Kupferkonverter ergab. Um diese ungenügende Ausnutzung der Kupferkonverter zu vermeiden und zur besseren Ausnutzung derselben ein möglichst grosses Verhältnis des eigentlichen Kupfervolumens zu dem von dem gebrauchten Draht eingenommenen Volumen zu erreichen, ging man daher dazu über, den gebrauchten Draht — wie z. B. aus dem Soudronic-Prospekt « VSA 50 E » (zweite Seite, rechte Spalte, zweiter Absatz) und aus dem Schuler-Prospekt « LCS Body-Welder » (Seite 7, Abb. Drahtführung, und rechte Spalte, Z. 1-4) ersichtlich — bereits an der Schweissmaschine mittels eines sogenannten Drahtzerhackers in kurze Drahtstücke von ca. 20 bis 40 mm Länge zu zerhacken und diesen anschliessend in einen Behälter aufgefangenen « Drahthäcksel », der natürlich ein wesentlich geringeres Volumen als eine entsprechende Menge von in dem besagten Behälterwickler unregelmässig gestapelten Draht beanspruchte, dann zur Wiedergewinnung des Kupfers der Verarbeitung in einem Kupferkonverter zuzuleiten.

Eine Weiterentwicklung dieser im letzten Jahrzehnt praktisch ausschliesslich angewandten Technik, den Elektrodendraht nach einmaliger Benutzung in kurze Drahtstücke zu zerhacken und aus diesen dann durch Einschmelzung und Raffination das Kupfer zurückzugewinnen, stellt der in letzter Zeit gemachte, nicht vorveröffentlichte Vorschlag dar, den Draht wesentlich feiner zu Drahtstücken von nur 1 bis 3 mm Länge zu zerhacken und dieses « Drahtgranulat » mit Hilfe einer Pressschnecke unter einen derart hohen Druck zu setzen, dass das Kupfer — gegebenenfalls unter zusätzlicher Erwärmung — in einen fliessfähigen Zustand übergeht und dann nach Art der bekannten Strangpressverfahren durch eine Matrize hindurch zu einem Kupferstrang von 2 bis 5 mm Durchmesser gepresst werden kann, der danach in einer Drahtzieheinrichtung zu einem wiederum als Elektrodendraht verwendbaren Draht mit geeignetem Durchmesser gezogen werden kann. Bei den Versuchen zur technischen Realisierung dieses Vorschlages traten aber eine Reihe von unvorhergesehenen Problemen, insbesondere mit der Ueberführung des Granulats in ein dichtes, keine Lufteinschlüsse aufweisendes fliessfähiges Material auf, die beträchtliche Schwierigkeiten verursachten und bisher nur bei einem Versuchsmodell überwunden werden konnten. Auf jeden Fall ist es bislang nur im Versuchsstadium gelungen, nach diesem Verfahren Drähte herzustellen, die wiederum als Elektrodendrähte in Schweissmaschinen einsetzbar sind und ganz abgesehen davon hat sich auch herausgestellt, dass der technische Aufwand für diese Verarbeitungsmethode wegen der entstandenen Probleme und der sich daraus ergebenden hohen Investitionskosten für eine dem Vorschlag entsprechende Anlage wesentlich höher ist, als wenn man den besagten Drahthäcksel in konventioneller Weise einschmelzen, raffinieren, zu Strängen giessen und dann aus den gegossenen Strängen neue Drähte ziehen würde.

Zusammenfassend lässt sich sagen, dass allen bekannten und vorgeschlagenen Formen der Verwertung von beim Widerstandslängsnahtschweissen mittels Drahtelektroden anfallenden benutzten Elektrodendrähten gemeinsam ist, dass in der Praxis bislang nur einmalige Nutzungen von solche Elektrodendrähte bildenden Kupferdrähten erfolgt sind und aus den einmalig benutzten Elektrodendrähten dann nur noch das Kupfer wiedergewonnen worden ist und alle Versuche und Vorschläge zu einer mehrfachen Nutzung dieser Kupferdrähte in der Praxis bisher gescheitert sind.

Der Erfindung lag daher die Aufgabe zugrunde, ein Verfahren der eingangs genannten Art zu schaffen, bei dem der Kupferdraht nach seiner ersten Nutzanwendung als Elektrodendraht zum Widerstandslängsnahtschweissen tatsächlich in der Praxis einer weiteren Nutzanwendung zugeführt werden kann und nicht mehr wie bisher nichts anderes übrig bleibt, als benutzte Elektrodendrähte der Abfallverwertung zur Wiedergewinnung des Kupfers zuzuleiten.

Erfindungsgemäss wird das mit einem Verfahren der eingangs genannten Art dadurch erreicht, dass der verformte und verunreinigte Kupferdraht nach der ersten Nutzanwendung einer eine Vielzahl von Ziehstufen umfassenden Drahtzieheinrichtung zugeleitet und dort derart gezogen wird, dass sich die Abstände der vom Drahtzentrum am weitesten entfernten Randbereiche des Drahtes vom Drahtzentrum in sämtlichen Ziehstufen und die Abstände der dem Drahtzentrum am nächsten liegenden Randbereiche des Drahtes vom Drahtzentrum in mindestens einem Teil der Ziehstufen verringern und dass sich ferner die Abstände der vom Drahtzentrum am weitesten entfernten Randbereiche des Drahtes vom Drahtzentrum in den Ziehstufen sukzessive mindestens so weit verringern, dass sie kleiner als die Abstände der dem Drahtzentrum vor dem Ziehen am nächsten liegenden Randbereiche des Drahtes vom Drahtzentrum werden, und dass sich die Abstände der dem Drahtzentrum am nächsten liegenden Randbereiche des Drahtes vom Drahtzentrum in dem genannten Teil der Ziehstufen so weit verringern, dass sie nach Durchlaufen der letzten Ziehstufe ebensogross wie die Abstände der vorher am weitesten vom Drahtzentrum entfernten Randbereiche des Drahtes vom Drahtzentrum sind, so dass aus dem verformten und verunreinigten Kupferdraht in der Drahtzieheinrichtung ein neuer Kupferrunddraht mit kreisförmigem Querschnitt und kleinerem Durchmesser als der geringsten äusseren Abmessung des verformten und verunreinigten Kupferdrahtes gezogen wird, und dass dieser neue Kupferrunddraht einer weiteren Nutzanwendung zugeführt wird.

Hauptvorteil des vorliegenden Verfahrens ist, dass damit erstmalig ein Widerstandslängsnahtschweissen von verzinnten Blechen mit Hilfe von Drahtelektroden ermöglicht werden konnte, bei dem die Drahtelektroden keine laufenden Betriebskosten mehr verursachen sondern im Gegenteil sogar noch zu einer Senkung der übrigen Betriebskosten beitragen können, weil der aus dem vorliegenden Verfahren hervorgehende neue Kupferrunddraht einen geringeren Durchmesser als der anfangs als Elektrodendraht verwendete Kupferdraht hat und aus diesem Grunde der Wert des aus dem vorliegenden Verfahren hervorgehenden neuen Kupferrunddrahtes pro Gewichtseinheit grösser als der Wert des anfangs als Elektrodendraht verwendeten Kupferdrahtes ist. Ueberraschenderweise wurde nämlich festgestellt, dass sich die Eigenschaften des aus dem vorliegenden Verfahren hervorgehenden neuen Kupferrunddrahtes von den Eigenschaften eines entsprechenden unmittelbar in einem Drahtziehwerk auf den gleichen Durchmesser gezogenen Drahtes nicht oder nur in einem vernachlässigbaren, weit unter den Standardtoleranzen liegenden Ausmass unterscheiden, dass also entgegen jeder Erwartung das vom dem Elektrodendraht nach seiner Benutzung zum Widerstandslängsnahtschweissen verzinnter Bleche mitgeführte, teils an seiner Oberfläche anhaftende und teils in der Kupfer-Zinn-Legierung in seinen Oberflächenschichten enthaltene Zinn die Eigenschaften des aus dem Elektrodendraht gezogenen Kupferrunddrahtes praktisch in keiner Weise beeinflusst. Das gilt ebenso für die elektrischen Eigenschaften, also beispielsweise den spezifischen Widerstand, wie auch für die mechanischen Eigenschaften, also z. B. die Festigkeit, wie schliesslich auch für das Aussehen des gezogenen neuen Kupferrunddrahtes, also die fehlerlos blanke Oberfläche desselben. Eingehende Untersuchungen dieses überraschenden Ergebnisses lassen vermuten, dass sich das von dem Elektrodendraht mitgeführte Zinn beim Ziehen des Drahtes offenbar in die Bereiche der sogenannten Gleitebenen verlagert, in denen sich verschiedene Zonen der den Draht im wesentlichen bildenden Kupferkristalle beim Ziehen des Drahtes gegeneinander verschieben, und dass dies der Grund dafür ist, dass z. B. die elektrische Leitfähigkeit des Drahtes in seiner Längsrichtung und auch die Zugfestigkeit desselben in Längsrichtung durch das eingelagerte Zinn praktisch überhaupt nicht beeinflusst wird. Das ursprünglich an dem Elektrodendraht anhaftende Zinn lagert sich offenbar, soweit es nicht durch den Ziehvorgang in das Drahtinnere gelangt, in Form von atomaren Schichten an der Drahtoberfläche an und kann demgemäss ebenfalls die elektrischen und mechanischen Eigenschaften des Drahtes in seiner Längsrichtung nicht beeinflussen. In diesem Zusammenhang ist darauf aufmerksam zu machen, dass beim Widerstandslängsnahtschweissen mittels Drahtelektroden der Schweissstrom ja nicht in Längsrichtung des Drahtes sondern in seiner Querrichtung durch den Draht fliesst, und dass es daher leicht erklärlich ist, weswegen schon benutzte Elektrodendrähte bei einer Wiederbenutzung wesentlich schlechtere Schweissergebnisse liefern, weil dort nämlich der Schweissstrom durch die oberflächlichen Kupfer-Zinn-Legierungen und das an der Drahtoberfläche anhaftende Zinn hindurchfliessen muss, während ein in Drahtlängsrichtung fliessender Strom an solchen Oberflächenschichten vorbeifliesst.

Auf jeden Fall wurde mit dem vorliegenden Verfahren erstmalig seit der ursprünglichen Schaffung von Schweissmaschinen zum Widerstandslängsnahtschweissen das Ergebnis erzielt, dass die zum Schweissen verwendeten Elektroden keine laufenden Betriebskosten verursachen sondern zur Senkung der übrigen Betriebskosten beitragen, denn auch früher, als noch unmittelbar mit Elektrodenrollen geschweisst wurde (und das erst durch die Verwendung von Drahtelektroden möglich gewordene Verschweissen von verzinnten Blechen noch nicht möglich war), haben sich die mit dem Schweissgut (meist blanken Stahlblechen) in Kontakt kommenden Laufflächen der Elektroden abgenutzt und nach einer gewissen Laufdauer zu einer verminderten Schweissqualität geführt, so dass die Elektrodenrollen jeweils nach einer bestimmten Laufdauer ausgewechselt werden mussten und damit natürlich laufende Betriebskosten verursachten.

Mit dem Wegfall der laufenden Betriebskosten für die Elektroden bringt das vorliegende Verfahren also für das Widerstandslängsnahtschweissen generell einen wesentlichen technischen Fortschritt mit sich, da man damit nunmehr auch beim Widerstandslängsnahtschweissen von blanken Stahlblechen, bei dem bisher aus Kostengründen noch überwiegend direkt mit Elektrodenrollen geschweisst wurde, auf das Schweissen mittels Drahtelektroden übergehen kann und dabei zusätzlich zu der Verbesserung der Schweissqualität auch noch Einsparungen erzielt.

Weitere Vorteile lassen sich mit dem vorliegenden Verfahren auch innerhalb der Technik des Widerstandslängsnahtschweissens mit Hilfe von Drahtelektroden erzielen. So ist es beispielsweise bei Anwendung des vorliegenden Verfahrens infolge des damit erzielbaren Wegfalls der laufenden Betriebskosten für die Elektroden ohne weiteres möglich, von der in der Technik des Widerstandslängsnahtschweissens mit Hilfe von Drahtelektroden in den letzten beiden Jahrzehnten nahezu ausschliesslich angewandten Verfahrensform des Schweissens mit nur einer über beide Elektrodenrollen geführten Drahtelektroden wieder auf die ursprüngliche, z. B. aus der CH-PS 370.175 (Fig. 1) bekannte Verfahrensform des Schweissens mit je einer gesonderten Drahtelektrode für jede der beiden Elektrodenrollen überzugehen und damit das gesamte Verfahren des Widerstandslängsnahtschweissens mit Hilfe von Drahtelektroden ohne Inkaufnahme höherer Betriebskosten wieder zu vereinfachen, denn der seinerzeitige Uebergang vom Schweissen mit je einer gesonderten Drahtelektrode für jede der beiden Elektrodenrollen zum Schweissen mit nur einer über beide Elektrodenrollen geführten Drahtelektrode war ja ausschliesslich zur Herabsetzung des Drahtverbrauches und der damit verbundenen Betriebskosten vorgenommen worden und hatte einige schwierige technische Probleme mit sich gebracht, deren Ueberwindung nur mit einem erhöhten apparativen Aufwand für die entsprechenden Schweissmaschinen möglich geworden war, und mit der Anwendung des vorliegenden Verfahrens und gleichzeitigem Uebergang auf das Schweissen mit je einer gesonderten Drahtelektrode für jede der beiden Elektrodenrollen lässt sich dieser erhöhte apparative Aufwand wieder reduzieren, wobei gleichzeitig noch die Betriebskosten wegfallen, die bisher noch für die über beide Elektrodenrollen geführte Drahtelektrode erforderlich gewesen waren.

Zusätzliche Vorteile sind mit Weiterbildungen der Erfindung erreichbar.

In der Regel wird bei dem vorliegenden Verfahren der in der Drahtzieheinrichtung gezogene neue Kupferdraht einer von der genannten ersten Nutzanwendung verschiedenen weiteren Nutzanwendung zugeführt. Eine der ersten Nutzanwendung gleiche weitere Nutzanwendung ist zwar nicht generell ausgeschlossen, aber sie kommt in der Praxis schon deswegen kaum in Betracht, weil die Durchmesser der gezogenen neuen Kupferdrähte in der Regel unterhalb des üblichen Durchmesserbereiches vom zum Widerstandslängsnahtschweissen verwendeten Elektrodendrähten liegen. Die von der genannten ersten Nutzanwendung verschiedene weitere Nutzanwendung kann vorteilhaft eine solche sein, bei der der neue Kupferrunddraht zur Stromleitung in Drahtlängsrichtung verwendet wird, und zwar zweckmässig in einer Daueranwendung, vorzugsweise als Signalleiter oder Wicklungsdraht. Der Vorteil einer von der genannten ersten Nutzanwendung verschiedenen weiteren Nutzanwendung ist, dass in diesem Fall, wie oben schon erwähnt, Beeinflussungen der Eigenschaften des gezogenen neuen Kupferrunddrahtes durch die erste Nutzanwendung ausgeschlossen sind.

Vorteilhaft kann bei dem vorliegenden Verfahren der in der Drahtzieheinrichtung gezogene neue Kupferrunddraht vor der Zuführung zu der genannten weiteren Nutzanwendung mit einer isolierenden Hülle, vorzugsweise mit einer Lackierung, versehen werden. Das kommt insbesondere für die genannten Anwendungsfälle als Signalleiter oder Wicklungsdraht in Frage. Ebenso kann es für diese und andere Anwendungsfälle vorteilhaft sein, den in der Drahtzieheinrichtung gezogenen neuen Kupferrunddraht nach Verlassen der letzten Ziehstufe durch Erhitzung auf eine mindestens seiner Rekristallisationstemperatur entsprechende und vorzugsweise über derselben liegende Temperatur weichzuglühen.

Wenn der Kupferdraht bei dem vorliegenden Verfahren vor der ersten Nutzanwendung so weit verfestigt wird, dass seine Bruchdehnung nach der ersten Nutzanwendung noch unter 10 %, liegt, sollte der nach der ersten Nutzanwendung verformte und verunreinigte Kupferdraht zweckmässig vor seiner Zuführung zur ersten Ziehstufe der Drahtzieheinrichtung durch Erhitzung auf eine mindestens seiner Rekristallisationstemperatur entsprechende und vorzugsweise über derselben liegende Temperatur weichgeglüht werden. Das hat den Vorteil, dass Drahtbrüche beim Durchlaufen der Drahtzieheinrichtung infolge zu starker Versprödung des Drahtes im wesentlichen ausgeschlossen werden.

Wird bei dem vorliegenden Verfahren eine Drahtzieheinrichtung verwendet, deren Verarbeitungskapazität pro Zeiteinheit ein Mehrfaches des Elektrodendrahtverbrauches pro Zeiteinheit von einer zu dem genannten elektrischen Widerstandslängsnahtschweissen verwendeten Schweissmaschine beträgt, dann kann es zur besseren Ausnutzung der Verarbeitungskapazität der Drahtzieheinrichtung von wesentlichem Vorteil sein, die Elektrodendrähte von mehreren zu dem genannten elektrischen Widerstandslängsnahtschweissen verwendeten Schweissmaschinen nach ihrer Benutzung als Elektrodendrähte zu sammeln und diese gesammelten, verformten und verunreinigten Kupferdrähte dann nacheinander der Drahtzieheinrichtung zuzuleiten. Zum Sammeln eines Elektrodendrahtes nach seiner Benutzung in einer Schweissmaschine kann dabei zweckmässig eine angetriebene Spule, vorzugsweise eine Scheibenspule, verwendet werden, auf die der Elektrodendraht lagenweise aufgebracht wird und deren Antrieb von der Schweissmaschine gesteuert wird und die vorzugsweise an der Schweissmaschine angeordnet wird. Vorteilhaft ist die Verwendung einer gemeinsamen Drahtzieheinrichtung für eine Vielzahl von Schweissmaschinen bzw. den bei diesen anfallenden gebrauchten Draht insbesondere für grosse Produktionsstätten mit einer Vielzahl von Schweissmaschinen, weil sich dann eine separate Drahtziehmaschine lohnt und solche speziell zum Drahtziehen ausgebildeten Maschinen wesentlich grössere Drahtmengen bzw. -gewichte verarbeiten können, als bei einer Schweissmaschine an gebrauchtem Draht anfallen. Eine solche separate Drahtziehmaschine kann aber natürlich mit Vorteil auch den bei einer Vielzahl von kleineren Produktionsstätten mit nur je einer oder zwei Schweissmaschinen gesammelten gebrauchten Draht verarbeiten.

Bei einer bevorzugten Ausführungsform des vorliegenden Verfahrens wird der Kupferdraht in der ersten Nutzanwendung zu einem Draht mit einer Querschnittsform verformt, bei der die Abstände der dem Drahtzentrum am nächsten liegenden Randbereiche des Drahtes vom Drahtzentrum weniger als das 0,7-fache der Abstände der vom Drahtzentrum am weitesten entfernten Randbereiche des Drahtes vom Drahtzentrum betragen, und nach der ersten Nutzanwendung wird der verformte und verunreinigte Kupferdraht in der Drahtzieheinrichtung derart gezogen, dass sich die Abstände der dem Drahtzentrum vor dem Ziehen am nächsten liegenden Randbereiche des Drahtes vom Drahtzentrum nur in der oder den letzten Ziehstufen verringern und sich demgemäss in der oder den ersten Ziehstufen nur die Abstände der vom Drahtzentrum am weitesten entfernten Randbereiche des Drahtes vom Drahtzentrum verringern, wobei mindestens in der bzw. den besagten letzten Ziehstufen, vorzugsweise jedoch in sämtlichen Ziehstufen, Ziehdüsen mit rotationssymmetrischen Ziehlöchern verwendet werden. Die Verwendung von Ziehdüsen mit rotationssymmetrischen Ziehlöchern hat natürlich gegenüber einer Verwendung von Ziehdüsen mit an die Querschnittsform des Drahtes angepassten Ziehdüsen den Vorteil eines wesentlich geringeren technischen Aufwandes, da die Herstellung von Ziehdüsen mit nicht rotationssymmetrischen Ziehlöchern äusserst kompliziert und entsprechend aufwendig ist und die Ziehdüsen sich im Betrieb ja auch abnützen und daher periodisch ersetzt werden müssen, aber andererseits besteht natürlich beim Ziehen eines Drahtes mit von der Kreisform abweichender Querschnittsform unter Verwendung einer Ziehdüse mit rotationssymmetrischem Ziehloch auch die Gefahr eines Auskrümmens des Drahtes in Richtung eines seiner dem Drahtzentrum am nächsten liegenden Randbereiche während des Ziehvorganges, und diese Gefahr ist natürlich umso grösser, je geringer das Verhältnis der Abstände der dem Drahtzentrum am nächsten liegenden Randbereiche des Drahtes vom Drahtzentrum zu den Abständen der vom Drahtzentrum am weitesten entfernten Randbereiche des Drahtes vom Drahtzentrum ist. Ist dieses Verhältnis grösser als 0,7, dann ist diese Gefahr gering, und auch wenn dieses Verhältnis zwischen 0,5 und 0,7 liegt, lässt sich diese Gefahr noch durch eine gegenüber den üblichen Querschnittsverminderungen relativ kleine Querschnittsverminderung des Drahtes in der betreffenden Ziehdüse gering halten, aber wenn dieses Verhältnis kleiner als 0,5 und insbesondere kleiner als 0,4 ist, dann reicht häufig die Massnahme einer relativ kleinen Querschnittsverminderung in der betreffenden Ziehdüse nicht mehr aus, um die Gefahr eines solchen Auskrümmens des Drahtes beim Ziehvorgang genügend gering zu halten, und in diesem Fall empfiehlt sich dann die Anwendung von ein solches Auskrümmen verhindernden Führungsmitteln.

Eine entsprechende Weiterbildung der genannten bevorzugten Ausführungsform des vorliegenden Verfahrens zeichnet sich daher dadurch aus, dass der Kupferdraht in der ersten Nutzanwendung zu einem Draht mit einer Querschnittsform verformt wird, bei der die Abstände der dem Drahtzentrum am nächsten liegenden Randbereiche des Drahtes vom Drahtzentrum vorzugsweise weniger als das 0,5-fache der Abstände der vom Drahtzentrum am weitesten entfernten Randbereiche des Drahtes vom Drahtzentrum betragen, und dass der nach der ersten Nutzanwendung verformte und verunreinigte Kupferdraht in der Drahtzieheinrichtung in mindestens einem Teil derjenigen Ziehstufen, in denen sich nur die Abstände der vom Drahtzentrum am weitesten entfernten Randbereiche des Drahtes vom Drahtzentrum verringern, durch in den betreffenden Ziehstufen vorgesehene rotationssymmetrische Ziehlöcher gezogen wird und in mindestens einem Teil dieser mit rotationssymmetrischen Ziehlöchern versehenen Ziehstufen, in denen sich nur die Abstände der vom Drahtzentrum am weitesten entfernten Randbereiche des Drahtes vom Drahtzentrum verringern, in den Ziehlöchern durch vom Einlauf derselben her in dieselben hineinragende Führungsmittel derart geführt wird, dass ein Auskrümmen des Drahtes in Richtung eines seiner dem Drahtzentrum am nächsten liegenden Randbereiche während des Ziehvorganges vermieden wird. Der wesentliche Vorteil solcher Führungsmittel ist, dass bei Verwendung derselben auf die genannte Massnahme einer relativ kleinen Querschnittsverminderung des Drahtes in der betreffenden Ziehdüse verzichtet werden kann, ohne dass dadurch die Gefahr eines Auskrümmens des Drahtes beim Ziehvorgang entsteht, und damit lässt sich natürlich bei Verwendung solcher Führungsmittel die Anzahl der Ziehstufen in der Drahtzieheinrichtung wesentlich verringern, so dass die Verwendung solcher Führungsmittel auch dann von beträchtlichem Vorteil sein kann, wenn das Verhältnis der Abstände der dem Drahtzentrum am nächsten liegenden Randbereiche des Drahtes vom Drahtzentrum zu den Abständen der vom Drahtzentrum am weitesten entfernten Randbereiche des Drahtes vom Drahtzentrum gleich oder grösser als 0,5 ist und insbesondere zwischen 0,5 und 0,7 liegt.

Mit besonderem Vorteil kann dabei als Führungsmittel zum Führen des Drahtes im Ziehloch eine an der Einlaufseite der Ziehdüse angeordnete Platte verwendet werden, die mit einem Schlitz sowie mit zwei auf der der Ziehdüse zugewandten Plattenseite angeordneten, in das Ziehloch hineinragenden nasenartigen Vorsprüngen versehen ist, die sich mit voneinander abgewandten Nasenrücken gegenüberstehen und deren Nasenrücken an der Wand des rotationssymmetrischen Ziehloches anliegen und deren einander zugewandte Wandflächen sich, vorzugsweise knickfrei, an die beiden den Schlitz begrenzenden Wände anschliessen und mindestens in dem oder den Bereichen des Ziehloches, in dem bzw. denen sich der Lochquerschnitt des Ziehloches von der Einlaufseite zur Auslaufseite der Ziehdüse hin verringert, einen wenigstens annähernd dem Abstand der dem Drahtzentrum am nächsten liegenden Randbereiche des Drahtes voneinander entsprechenden Abstand haben, so dass der Schlitz zusammen mit den einander zugewandten Wandflächen der nasenartigen Vorsprünge und den nicht von diesen Vorsprüngen abgedeckten Wandflächen des Ziehloches einen Ziehkanal bilden, in dem sich beim Durchziehen des Drahtes nur noch die Abstände der vom Drahtzentrum am weitesten entfernten, mit den nicht von den Vorsprüngen abgedeckten Wandflächen des Ziehloches in Kontakt kommenden Randbereiche des Drahtes vom Drahtzentrum verringern und in dem durch die einander zugewandten Wandflächen der nasenartigen Vorsprünge ein Auskrümmen des Drahtes in Richtung eines seiner dem Drahtzentrum am nächsten liegenden Randbereiche des Drahtes verhindert wird. Der Vorteil der Verwendung einer solchen mit Schlitz und nasenartigen Vorsprüngen versehenen, an der Einlaufseite der Ziehdüse angeordneten Platte als Führungsmittel zum Führen des Drahtes im Ziehloch ist, dass die Kombination der Platte mit der zugeordneten rotationssymmetrischen Ziehdüse einen an die Querschnittsform des durch die Ziehdüse zu ziehenden Drahtes angepassten Ziehkanal bildet, dass aber der infolge von Abnützung periodisch erforderliche Ersatz nur die rotationssymmetrische Ziehdüse betrifft, weil die nasenartigen Vorsprünge der Platte ja nur zum Führen des Drahtes, nicht jedoch zu dessen Querschnittsverminderung dienen und sich daher auch praktisch nicht abnützen, so dass die Platte beim Ersatz der rotationssymmetrischen Ziehdüse nicht mit ausgewechselt werden braucht.

Vorteilhaft können dabei zur Befestigung von Ziehdüse und Platte Befestigungsmittel verwendet werden, mit denen Ziehdüse und Platte relativ zueinander drehbar und in verschiedenen Winkellagen fixierbar sind, so dass die Ziehdüse durch Fixierung von Ziehdüse und Platte relativ zueinander in $n$ verschiedenen gegeneinander um je $180°/n$ versetzten Winkellagen $n$-fach ausnutzbar ist, wobei $n$ eine ganze Zahl ist, die grösser als 1 und kleiner oder höchstens gleich 90°/arc sin a/d ist, und wobei a gleich dem Abstand der dem Drahtzentrum am nächsten liegenden Randbereiche des Drahtes voneinander und d gleich dem Durchmesser des Ziehloches an der Stelle seines geringsten Lochquerschnittes ist. Der Vorteil der Verwendung solcher Befestigungsmittel und der damit ermöglichten n-fachen Ausnutzung der Ziehdüse ist eine n-fache Betriebsdauer der Ziehdüse, und in Verbindung mit dem oben schon erwähnten generellen Vorteil von Führungsmitteln zum Führen des Drahtes im Ziehloch, dass auf die Massnahme von relativ kleinen Querschnittsverminderungen des Drahtes in den Ziehdüsen verzichtet werden kann und dementsprechend die Anzahl der Ziehstufen in der Drahtzieheinrichtung relativ gering gehalten werden kann, lässt sich damit eine Drahtzieheinrichtung schaffen, bei der sowohl der apparative Aufwand als auch deren Betriebskosten sehr gering gehalten werden können und die sich daher besonders zum direkten Einbau in eine Schweissmaschine eignet.

Insbesondere bei relativ grossen Querschnittsverminderungen des Drahtes pro Ziehstufe empfiehlt es sich jedoch, als mit Schlitz und nasenartigen Vorsprüngen versehene Platte eine Platte zu verwenden, bei der mindestens ihre mit dem durchlaufenden Draht in Kontakt kommenden Wandteile, vorzugsweise wenigstens die nasenartigen Vorsprünge und die sich daran anschliessenden Wandteile der den Schlitz begrenzenden Wände, aus Hartmetall bestehen. Das hat den Vorteil, dass sich auch bei einer beträchtlichen Verminderung des Drahtquerschnittes in der Ziehdüse und dadurch verursachten Auskrümmversuchen des Drahtes sowie entsprechend grösserer Reibung desselben an den einander zugewandten Wandflächen der nasenartigen Vorsprünge praktisch keine Abnützung dieser Wandflächen ergibt.

.Die Erfindung betrifft weiter eine Einrichtung zur Durchführung des vorliegenden Verfahrens, die gekennzeichnet ist durch eine Schweissmaschine zum elektrischen Widerstandslängsnahtschweissen mit Hilfe von Drahtelektroden und eine in die Schweissmaschine integrierte Drahtzieheinrichtung zum Ziehen des bei dem Widerstandslängsnahtschweissen in Form von verformtem und verunreinigtem Kupferdraht anfallenden benutzten Elektrodendrahtes zu neuem Kupferrunddraht mit kreisförmigem Querschnitt und kleinerem Durchmesser als der geringsten äusseren Abmessung des verformten und verunreinigten Kupferdrahtes.

Der Vorteil einer solchen Integration der Drahtzieheinrichtung in die Schweissmaschine ist in erster Linie, dass die Schweissmaschine neben ihrem Hauptprodukt, also den verschweissten Blechen, auch ein fertiges Nebenprodukt und nicht nur ein noch in einer separaten Drahtzieheinrichtung weiterzuverarbeitendes Zwischenprodukt liefert. Ein weiterer Vorteil ist die Anpassbarkeit der in die Schweissmaschine integrierten Drahtzieheinrichtung an die durch die Schweissmaschine vorgegebenen Betriebsbedingungen wie z. B. die sich mit der gegenüber den üblichen Ziehgeschwindigkeiten relativ geringen Austrittsgeschwindigkeit des benutzten Elektrodendrahtes aus der Schweissstation und der entsprechend kleinen Ziehgeschwindigkeit des Drahtes in der integrierten Drahtzieheinrichtung ergebende Möglichkeit, den Draht in der integrierten Drahtzieheinrichtung nahezu trocken zu ziehen.

Die Erfindung betrifft ferner eine Anlage zur Durchführung des vorliegenden Verfahrens, die gekennzeichnet ist durch eine Mehrzahl von Schweissmaschinen zum elektrischen Widerstandslängsnahtschweissen mit Hilfe von Drahtelektroden sowie Mittel zum Sammeln des in Form von verformtem und verunreinigtem Kupferdraht anfallenden benutzten Elektrodendrahtes an jeder der Schweissmaschinen und eine separate Drahtziehmaschine mit einer mindestens dem gesamten Elektrodendrahtverbrauch von allen diesen Schweissmaschinen pro Zeiteinheit entsprechenden Verarbeitungskapazität pro Zeiteinheit zum Ziehen der gesammelten benutzten Elektrodendrähte von allen diesen Schweissmaschinen zu neuem Kupferdraht mit kreisförmigem Querschnitt und kleinerem Durchmesser als der geringsten äusseren Abmessung des verformten verunreinigten Kupferdrahtes.

Der Vorteil einer solchen Anlage liegt in der Verarbeitung des in allen Schweissmaschinen der Anlage anfallenden benutzten Elektrodendrahtes in der genannten separaten Drahtziehmaschine und dem sich damit ergebenden Wegfall von individuellen Drahtzieheinrichtungen an jeder einzelnen Schweissmaschine sowie dem daraus resultierenden geringeren technischen Aufwand für die gesamte Anlage. Eine solche Anlagenkonzeption hat weiterhin den Vorteil, dass sie auch auf bereits bestehende Produktionsstätten bzw. bereits vorhandene Schweissmaschinen anwendbar ist, indem diese Schweissmaschinen einfach mit je einem Zusatzaggregat zum Sammeln des benutzten Elektrodendrahtes versehen werden.

Vorteilhaft können bei dieser Anlage die Mittel zum Sammeln des benutzten Elektrodendrahtes mindestens eine angetriebene Spule, vorzugweise eine Scheibenspule, an jeder der Schweissmaschinen zum Aufspulen des benutzten Elektrodendrahtes, Mittel zum Antrieb der Spule und Steuermittel zur Steuerung dieses Antriebs sowie vorzugsweise Mittel zur lagenweisen Aufbringung des benutzten Elektrodendrahtes auf die Spule umfassen. Dabei ist es von Vorteil, wenn die Spulen sämtlicher Schweissmaschinen der Anlage derart normiert sind, dass jede dieser Spulen direkt in die Abzugseinrichtung der separaten Drahtziehmaschine einsetzbar ist.

Die Erfindung ist im folgenden anhand von zwei Ausführungsbeispielen näher erläutert.

Bei einem ersten Ausführungsbeispiel wird ein halbweicher blanker Kupferdraht von 1,38 mm Durchmesser mit einem Drahtquerschnitt von 1,496 mm$^2$, einer Zufestigkeit $\delta_{0,2}$ an der 0,2 %-Dehngrenze von 191 N/mm$^2$ (19,5 kg/mm$^2$) und einem spezifischen Widerstand bei 20 °C von 0,01747 Ohm. mm$^2$/m zu einer ersten Nutzanwendung mit einer Geschwindigkeit von 0,78 m/sec einer vollautomatischen Schweissmaschine zum elektrischen Widerstandslängsnahtschweissen von Dosenkörpern aus 0,18 mm starken verzinnten Stahlblechen mit Hilfe von nur einem über beide Elektrodenrollen geführten Elektrodendraht zugeleitet und dort zunächst einmal zur Verhütung einer Schlaufenbildung in der Drahtschleife zwischen den beiden Elektrodenrollen nach der CH-PS 370.175 in einem Quetschaggregat mit zwei angetriebenen Rollenwalzen zu einem Hartdraht in der Form eines Flachdrahtes von 0,73 mm Höhe und 1,82 mm grösster Breite mit zwei im wesentlichen ebenen Elektrodenflächen von 1,67 mm Breite an seiner Ober- und Unterseite und mit einem Drahtquerschnitt von 1,292 mm² ausgewalzt und dabei um ca. 15,8 %, verlängert und auf eine Zugfestigkeit $\delta_{0,2}$ an der 0,2 %-Dehngrenze von 286 N/mm² (29,2 kg/mm²) verfestigt. Der ausgewalzte und verfestigte Elektrodendraht verlässt das Quetschaggregat infolge seiner Verlängerung durch das Auswalzen mit einer Geschwindigkeit von ca. 0,90 m/sec und wird anschliessend mit dieser Geschwindigkeit derart über die erste der beiden Elektrodenrollen geführt, dass seine Oberseite dem Schweissgut und seine Unterseite der Elektrodenrolle zugewandt ist. Auf diese dem Schweissgut zugewandte Oberseite des Elektrodendrahtes geht von dem unteren der beiden zu verschweissenden Blechränder aus verzinntem Stahlblech, mit dem diese Oberseite des über die erste Elektrodenrolle geführten Elektrodendrahtes beim Passieren der Schweissstelle in Kontakt kommt, Zinn über, das infolge des durchfliessenden Schweissstromes sowie der sich daraus ergebenden Erhitzung des Elektrodendrahtes zum Teil in die Drahtoberfläche an dieser Oberseite des Elektrodendrahtes eindringt und in den betreffenden Oberflächenschichten eine Kupfer-Zinn-Legierung bildet und zum Teil die Oberseite des Elektrodendrahtes mit einer dünnen Zinnschicht überzieht. Anschliessend läuft der Elektrodendraht in einer Schleife, nämlich der oben schon genannten Drahtschleife, zu der zweiten der beiden Elektrodenrollen und wird derart über dieselbe geführt, dass seine noch nicht mit Zinn verunreinigte Unterseite dem Schweissgut und seine Oberseite der Elektrodenrolle zugewandt ist. Auf diese dem Schweissgut zugewandte Unterseite des Elektrodendrahtes geht daher von dem oberen der beiden zu verschweissenden Blechränder aus verzinntem Stahlblech, mit dem diese Unterseite des über die zweite Elektrodenrolle geführten Elektrodendrahtes beim Passieren der Schweissstelle in Kontakt kommt, Zinn über, das ebenfalls infolge des durchfliessenden Schweissstromes sowie der sich daraus ergebenden Erhitzung des Elektrodendrahtes zum Teil in die Drahtoberfläche an dieser Unterseite des Elektrodendrahtes eindringt und in den betreffenden Oberflächenschichten eine Kupfer-Zinn-Legierung bildet und zum Teil die Unterseite des Elektrodendrahtes mit einer dünnen Zinnschicht überzieht. Beim Passieren der zweiten Elektrodenrolle ergibt sich ausserdem noch eine geringe Verlängerung sowie eine entsprechende Querschnittsverminderung des Elektrodendrahtes, die auf die kombinierte Wirkung der Erhitzung des Elektrodendrahtes an der Schweissstelle durch den durchfliessenden Schweissstrom und daraus resultierender Härteverluste des Drahtes und einer auf den Draht einwirkenden relativ grossen Zugspannung zurückzuführen ist, die von einem von dem Draht nach Verlassen der zweiten Elektrodenrolle durchlaufenen Förderorgan auf den Draht ausgeübt wird. Der die zweite Elektrodenrolle verlassende Flachdraht hat daher nur noch einen Drahtquerschnitt von 1.23 mm², eine Höhe von 0,71 mm, eine Gesamtbreite von 1,78 mm, eine Breite seiner beiden Flachseiten von 1,63 mm und eine Zugfestigkeit $\delta_{0,2}$ an der 0,2 %-Dehngrenze von 200 N/mm² (20,4 kg/mm²) und hat sich um weitere 5,1 % verlängert, so dass er das vorgenannte Förderorgan mit einer Geschwindigkeit von 0,95 m/sec passiert. Nach Verlassen des Förderorgans wird dieser auf seinen beiden Flachseiten mit Zinn verunreinigte Flachdraht dann mittels einer an der Schweissmaschine angebrachten Aufwickeleinrichtung auf eine Scheibenspule lagenweise aufgewickelt, wobei die Scheibenspule von einem Antriebsmotor angetrieben wird, dessen Drehzahl mittels eines die Drahtspannung zwischen Förderorgan und Scheibenspule feststellenden Messorganes derart eingeregelt wird, dass diese Drahtspannung zwischen Förderorgan und Scheibenspule bei ca. 49 N/mm² (5 kg/mm²) annähernd konstant bleibt. Die Aufwickeleinrichtung ist dabei mit zwei Spulen versehen, auf die der Draht abwechselnd aufgewickelt wird, wobei jeweils in dem Moment, wenn eine Spule vollgewickelt ist, automatisch der Draht abgeschnitten, das Drahtende an der vollen Spule fixiert, der neue Drahtanfang an der anderen leeren Spule fixiert und dann der Draht auf diese andere Spule aufgewickelt wird. Während der Bewicklung dieser anderen Spule wird dann die volle Spule abgenommen und durch eine leere Spule ersetzt, auf die dann nach dem nächsten Wechsel der Draht aufgewickelt wird. Auf diese Weise kann der Spulenwechsel in der Aufwickeleinrichtung ohne Unterbrechung des Schweissbetriebes erfolgen. Entsprechende Aufwickeleinrichtungen, die auch den Antriebsmotor, die Drehzahlregeleinrichtung für denselben, die Messeinrichtung zur Messung der Drahtspannung und eine Drahtführeinrichtung zum lagenweisen Aufwickeln umfassen, sind sowohl aus der Technik der Drahtherstellung wie auch aus der Technik der Herstellung von Textilfäden bekannt und brauchen daher hier nicht näher beschrieben werden. Die vollen Spulen von dieser Schweissmaschine und einer grösseren Anzahl anderer gleichartiger Schweissmaschinen werden dann einer Drahtziehmaschine zugeleitet, wo der Flachdraht von den nacheinander eingesetzten Spulen mit einer Geschwindigkeit von ca. 9,2 m/sec abgezogen und in der Zieheinrichtung derselben zu einem neuen Kupferrunddraht von 0,6 mm Durchmesser gezogen wird. Aufgrund der Zuführungsgeschwindigkeit des von den Spulen abgezogenen Flachdrahtes von ca. 9,2 m/sec und der ausgangsseitigen Geschwindigkeit des Flachdrahtes an dem genannten Förderorgan der Schweissmaschine von 0,95 m/sec hat die Drahtziehmaschine bei etwa gleicher täglicher Betriebsdauer wie die Schweissmaschinen eine Verarbeitungskapazität, die zur Verarbeitung der mit Flachdraht bewickelten Spulen von 9 bis 10 Schweissmaschinen ausreicht. In der Zieheinrichtung der Drahtziehmaschine wird der zugeführte Flachdraht in 10 Ziehstufen zu dem neuen Kupferrunddraht von 0,6 mm Durchmesser gezogen. In allen 10 Ziehstufen werden Ziehdüsen mit rotationssymmetrischen Ziehlöchern verwendet, deren Durchmesser an der jeweils engsten Stelle der Reihenfolge nach 1,69 mm, 1,58 mm, 1,455 mm, 1,32 mm, 1,18 mm, 1,04 mm, 0,905 mm, 0,782 mm, 0,684 mm und 0,6 mm betragen. Die Geschwindigkeit des Drahtes beträgt bei seiner Zuführung zur Zieheinrichtung, wie oben schon erwähnt, 9,2 m/sec und nach den einzelnen Ziehstufen der Reihenfolge nach ca. 9,72 m/sec, 10,45 m/sec, 11,42 m/sec, 12,71 m/sec, 14,43 m/sec, 16,73 m/sec, 19,89 m/sec, 24,36 m/sec, 30,78 m/sec und 40 m/sec. Entsprechend ergeben sich in den einzelnen Ziehstufen der Reihenfolge nach Drahtverlängerungen von ca. 5,66 %, 7,46 %, 9,33 %, 11,31 %, 13,49 %, 15,96 %, 18,92 %, 22,43 %, 26,39 %, und 29,96 % und der bei der Einführung in die erste Ziehstufe ca. 1,23 mm² betragende Drahtquerschnitt nimmt in den einzelnen Ziehstufen der Reihenfolge nach auf ca. 1,16 mm², 1,08 mm², 0,99 mm², 0,89 mm², 0,78 mm², 0,66 mm², 0,57 mm², 0,46 mm², 0,37 mm² und 0,28 mm² ab. Nach Verlassen der letzten Ziehstufe wird der gezogene neue Kupferrunddraht in der Drahtziehmaschine noch im Durchlaufverfahren weichgeglüht und hierzu zunächst auf einer ca. 2 m langen Vorglühstrecke mittels eines durch den Draht hindurchgeleiteten Stromes auf etwa 80 °C bis 110 °C vorgewärmt und dann in einem ca. 2 m langen, die sogenannte Hauptglühstrecke bildenden Kanal in einer zur Vermeidung einer Oxidation des Drahtes dienenden Wasserdampf-Schutzgasatmosphäre ebenfalls mittels eines durch den Draht hindurchgeleiteten elektrischen Stromes auf 220 °C bis 250 °C erhitzt und anschliessend nach Verlassen dieses Kanals dann mittels einer Aufwickeleinrichtung mit einem prinzipiellen Aufbau wie dem der oben schon beschriebenen Aufwickeleinrichtung auf Spulen aufgewickelt und danach zur Isolierung einer Lackieranlage zugeleitet, nach deren Verlassen der isolierte neue Kupferrunddraht dann der weiteren Nutzanwendung, z. B. als Signalleiter in Telefonkabeln oder als Wicklungsdraht für Elektromotoren, zugeführt wird. Der neue Kupferrunddraht hat einen Leiterquerschnitt von 0,283 mm², eine Zugfestigkeit $\delta_{0,2}$ an der 0,2 %-Dehngrenze von 110 N/mm² (11,3 kg/mm²) und einen spezifischen Widerstand bei 20 °C von 0,01734 Ohm. mm²/m und ist in seinen elektrischen und mechanischen Eigenschaften von einem entsprechenden direkt auf eine Drahtziehmaschine gezogenen Draht nicht zu unterscheiden.

Bei einem zweiten Ausführungsbeispiel wird wiederum ein halbweicher blanker Kupferdraht von 1,36 mm Durchmesser mit einem Drahtquerschnitt von 1,453 mm², einer Zugfestigkeit $\delta_{0,2}$ an der 0,2 %-Dehngrenze von 193 N/mm² (19,7 kg/mm²) und einem spezifischen Widerstand bei 20 °C von 0,01749 Ohm. mm²/m zu einer ersten Nutzanwendung mit einer Geschwindigkeit von 0,66 m/sec einer vollautomatischen Schweissmaschine zum elektrischen Widerstandslängsnahtschweissen von Dosenkörpern aus 0,19 mm starken verzinnten Stahlblechen mit Hilfe von nur einem über beide Elektrodenrollen geführten Elektrodendraht zugeleitet und dort zunächst einmal zur Verhinderung einer Schlaufenbildung in der Drahtschleife zwischen den beiden Elektrodenrollen nach der CH-PS 370.175 in Verbindung mit der CH-Anmeldung 5117/83-6 zu einem Hartdraht verformt und verfestigt, wobei der Kupferdraht jedoch bei diesem Ausführungsbeispiel zunächst einmal in einer ersten Verformungsstufe mittels einer Ziehdüse von seinem Durchmesser von 1,36 mm auf einen Durchmesser von 1,2 mm und einen Drahtquerschnitt von 1.131 mm² gezogen und dabei um ca. 28,4 %, verlängert und auf eine Drahtgeschwindigkeit von ca. 0,85 m/sec gebracht und gleichzeitig auf eine Zugfestigkeit $\delta_{0,2}$ an der 0,2 %-Dehngrenze von 319 N/mm² (32,6 kg/mm²) verfestigt wird und erst dieser 1,2 mm starke Kupferdraht dann in einer zweiten Verformungsstufe in einem Quetschaggregat mit zwei angetriebenen Rollenwalzen zu einem Flachdraht von 0,585 mm Höhe und 1,84 mm grösster Breite mit zwei im wesentlichen ebenen Elektrodenflächen von 1,74 mm Breite an seiner Ober- und Unterseite und mit einem Drahtquerschnitt von 1,058 mm² ausgewalzt und dabei nochmals um ca. 6,9 %, verlängert und somit auf eine Drahtgeschwindigkeit von ca. 0,91 m/sec gebracht und gleichzeitig weiter auf eine Zugfestigkeit $\delta_{0,2}$ an der 0,2 %-Dehngrenze von 375 N/mm² (38,3 kg/mm²) verfestigt wird. Der Flachdraht wird dann in gleicher Weise wie bei dem ersten Ausführungsbeispiel über die beiden Elektrodenrollen geführt und verlässt die zweite Elektrodenrolle ebenfalls mit einer Kupfer-Zinn-Legierung in den Oberflächenschichten seiner beiden Flachseiten und einer dünnen Zinnschicht auf denselben sowie ferner mit einer reduzierten Härte und einer geringen Verlängerung sowie einer entsprechenden Querschnittsverminderung und hat daher nach Verlassen der zweiten Elektrodenrolle nur noch einen Drahtquerschnitt von 1,009 mm², eine Höhe von 0,57 mm, eine Gesamtbreite von 1,80 mm, eine Breite seiner beiden Flachseiten von 1,71 mm und eine Zugfestigkeit $\delta_{0,2}$ an der 0,2 %-Dehngrenze von 233 N/mm² (23,8 kg/mm²) und hat sich zudem um weitere 4,9 % verlängert, so dass er das nach der zweiten Elektrodenrolle angeordnete Förderorgan mit einer Geschwindigkeit von 0,95 m/sec passiert. Nach Verlassen der Förderorgans wird dieser auf seinen beiden Flachseiten mit Zinn verunreinigte Flachdraht dann einer unmittelbar an der Schweissmaschine angebrachten, synchron mit dem Förderorgan angetriebenen Zieheinrichtung mit Reihenzug zugeleitet und mit derselben in 6 Ziehstufen zu einem neuen Kupferrunddraht von 0,5 mm Durchmesser gezogen. In allen 6 Ziehstufen werden als Ziehdüsen Diamantziehsteine mit rotationssymmetrischen Ziehlöchern verwendet, deren Durchmesser an der jeweils engsten Stelle der Reihenfolge nach 1,43 mm, 1,14 mm, 0,844 mm, 0,701 mm, 0,578 mm und 0,5 mm betragen. Die Geschwindigkeit des Drahtes beträgt bei seiner Zuführung zur Zieheinrichtung, wie oben schon erwähnt, ca. 0,95 m/sec und nach den einzelnen Ziehstufen der Reihenfolge nach ca. 1,21 m/sec, 1,54 m/sec, 2,06 m/sec, 2,74 m/sec, 3,66 m/sec und 4,88 m/sec. Entsprechend ergeben sich in den einzelnen Ziehstufen der Reihenfolge nach Drahtverlängerungen von ca. 27,19 %, 27,57 %, 33,28 %, 33,41 %, 33,49 % und 33,37 %, und der bei der Einführung in die erste Ziehstufe ca. 1,01 mm² betragende Drahtquerschnitt nimmt in den einzelnen Ziehstufen der Reihenfolge nach auf ca. 0,793 mm², 0,622 mm², 0,466 mm², 0,35 mm², 0,262 mm² und 0,196 mm² ab. Da der technische Aufwand für eine an der Schweissmaschine angebrachte Drahtzieheinrichtung natürlich so gering wie möglich zu halten ist und dementsprechend die Anzahl der Ziehstufen bei einer solchen Drahtzieheinrichtung möglichst klein sein sollte, ergeben sich bei dem vorliegenden Ausführungsbeispiel wie ersichtlich insbesondere in den ersten Ziehstufen wesentlich grössere Reduktionen des Drahtquerschnitts als bei der Drahtziehmaschine in dem obigen ersten Ausführungsbeispiel, und bei diesen Drahtquerschnittsreduktionen von 27 bis 33,5 %, besteht beim Ziehen von Flachdrähten unter Verwendung von Ziehdüsen mit rotationssymmetrischen Ziehlöchern — anders als bei den geringen Drahtquerschnittsreduktionen von nur 5 bis 10 % in den ersten drei Ziehstufen der Drahtziehmaschine beim obigen ersten Ausführungsbeispiel — die Gefahr eines Auskrümmens des Flachdrahtes beim Ziehvorgang in Richtung eines seiner dem Drahtzentrum am nächsten liegenden Randbereiche, und diese Gefahr ist natürlich umso grösser, je flacher der Draht ist bzw. je geringer das Verhältnis von Drahthöhe zu Drahtbreite ist. Und da dieses Verhältnis beim vorliegenden Ausführungsbeispiel vor den ersten drei Ziehstufen mit 0,57 : 1,80 = 0,317, 0,57 : 1,43 = 0,399 und 0,57 : 1,14 = 0,5 im Bereich zwischen 0,3 und 0,5 liegt und damit relativ gering ist und gleichzeitig relativ grosse Drahtquerschnittsreduktionen von 27,19 %, 27,57 % und 33,28 % in den ersten drei Ziehstufen vorgesehen sind, sind beim vorliegenden Ausführungsbeispiel in den ersten drei Ziehstufen zur Vermeidung eines Auskrümmens des Flachdrahtes beim Ziehvorgang Führungsmittel zur Führung des Drahtes in den ersten drei Ziehdüsen vorgesehen, und zwar in Form von je einer an der Einlaufseite der Ziehdüse angeordneten Platte, die mit einem Schlitz sowie mit zwei auf der der Ziehdüse zugewandten Plattenseite angeordneten, in das Ziehloch hineinragenden nasenartigen Vorsprüngen versehen ist, die sich mit voneinander abgewandten Nasenrücken gegenüberstehen und deren Nasenrücken an der Wand des rotationssymmetrischen Ziehloches anliegen und deren einander zugewandte Wandflächen sich knickfrei an die beiden den Schlitz begrenzenden Wände anschliessen. Der Schlitz bildet zusammen mit den einander zugewandten Wandflächen der nasenartigen Vorsprünge und den nicht von diesen Vorsprüngen abgedeckten Wandflächen des Ziehloches einen Ziehkanal mit einem an den Querschnitt des durchzuziehenden Drahtes angepassten Kanalquerschnitt, wobei die Kanalwände von den Randflächen des Drahtes am Kanaleingang einen Abstand von ca. 0,1 mm, in dem sich verjüngenden Bereich des Ziehloches praktisch keinen Abstand mehr und am Kanalausgang einen Abstand von ca. 0,025 mm haben. Die einander zugewandten Wandflächen der nasenartigen Vorsprünge liegen in dem sich verjüngenden Bereich des Ziehloches in parallelen Ebenen und haben einen Abstand von 0,6 mm. Die Platten sind an den Halterungen der zugeordneten Ziehdüsen drehbar befestigt und in bestimmten Winkellagen fixierbar, und zwar die in der ersten und der zweiten Ziehstufe vorgesehenen Platten in jeweils 3 gegeneinander um je 60° versetzten Winkellagen und die in der dritten Ziehstufe vorgesehene Platte in zwei gegeneinander um 90° versetzten Winkellagen. Dadurch sind die Ziehdüsen in der ersten und zweiten Ziehstufe je dreifach und die Ziehdüse in der dritten Ziehstufe doppelt ausnutzbar. Mit dieser mehrfachen Ausnutzbarkeit der Ziehdüsen in den ersten drei Ziehstufen und der Verwendung von Diamantziehsteinen als Ziehdüsen ergibt sich bei der durch die Schweissmaschine vorgegebenen relativ geringen Ziehgeschwindigkeit und dem entsprechend geringen Drahtdurchlauf durch die Zieheinrichtung eine Betriebsdauer der Ziehdüsen von mehreren Jahrzehnten, so dass die Ziehdüsen praktisch nie ausgewechselt werden brauchen. Zur Vermeidung einer Abnutzung der zur Führung des Drahtes vorgesehenen Führungsflächen, also der mit dem durchlaufenden Draht in Kontakt kommenden Wandteile der Platten, bestehen die nasenartigen Vorsprünge und die sich daran anschliessenden Wandteile der den Schlitz begrenzenden Wände aus Hartmetall. Damit erreichen auch die Platten eine ähnlich grosse Betriebsdauer wie die Ziehdüsen, da diese Führungsflächen ja nur zur Führung dienen und im Gegensatz zu den Ziehdüsen keine querschnittsvermindernde Wirkung auf den Draht haben und dementsprechend — jedenfalls dann, wenn sie aus Hartmetall bestehen — praktisch keiner Abnutzung unterworfen sind. Um auch die Reibung innerhalb der Ziehdüsen gering zu halten, wird den Ziehkanälen in den ersten drei Ziehstufen über die Platten Ziehöl zugeführt, und zwar in so geringen Mengen, dass das Ziehöl als Oelfilm am Draht haften bleibt und praktisch nicht von den Ziehdüsen abgestreift wird. Das an dem Draht haftende Oel reicht auch zur Schmierung in den letzten drei Ziehstufen, so dass in diesen Ziehstufen kein Ziehöl zugeführt werden braucht, und auch nach Verlassen der letzten Ziehstufe ist der gezogene neue Kupferrunddraht noch von einem dünnen Oelfilm bedeckt, der auf dem Draht belassen wird und nach der Herstellung als Schutzschicht zum Schutz des hergestellten blanken Drahtes gegen Korrosion wirkt. Die Ziehdüsen sämtliche Ziehstufen sind in üblicher Weise von Kühlmänteln umgeben, die an das Wasser-Kühlsystem der Schweissmaschine angeschlossen sind. Zu bemerken ist in diesem Zusammenhang jedoch, dass eine Wasserkühlung der Ziehdüsen nicht zwingend erforderlich ist, da die in den Ziehdüsen entstehende Reibungswärme wegen der durch die Schweissmaschine vorgegebenen relativ geringen Ziehgeschwindigkeit relativ klein ist und daher auch eine Konvektionskühlung durch eine umgebende strömende Atmosphäre ausreichend wäre. Nach Verlassen der letzten Ziehstufe wird der gezogene neue Kupferrunddraht dann noch im Durchlaufverfahren weichgeglüht und hierzu zunächst auf einer ca. 30 cm langen Vorglühstrecke mittels eines durch den Draht hindurchgeleiteten elektrischen Stromes auf etwa 80 °C bis 110 °C vorgewärmt und dann auf einer ca. 30 cm langen Hauptglühstrecke ebenfalls mittels eines durch den Draht hindurchgeleiteten elektrischen Stromes auf 220 °C bis 250 °C erhitzt und anschliessend durch eine ca. 30 cm lange Kühlstrecke geleitet. Die Vor- und Hauptglühstrecke und auch die Kühlstrecke können wegen der relativ geringen Geschwindigkeit des Drahtes von nur 4,88 m/sec so kurz gehalten werden. Zur Vermeidung einer Oxydation beim Weichglühen liegen Vorglühstrecke, Hauptglühstrecke und Kühlstrecke in einem im vorliegenden Fall S-förmigem Kanal, durch den vom Kühlstreckenausgang her Stickstoff hindurchgeleitet wird, der anschliessend dann als Schutzgas zum Schweissen verwendet wird. Der Kanal kann sich ferner auch noch auf die gesamte Zieheinrichtung erstrecken, was insbesondere dann in Betracht kommt, wenn auf eine Wasserkühlung der Ziehdüsen verzichtet wird und der strömende Stickstoff stattdessen eine Konvektionskühlung übernimmt und auch eine Oxydation des Drahtes beim Ziehen bei grösserer Erhitzung in den Ziehdüsen verhindert. Im letzteren Falle kann übrigens auch auf die Vorglühstrecke verzichtet werden. Der Stickstoffstrom tritt am Ausgang der Kühlstrekke in den genannten Kanal ein und fliesst dann entgegen der Drahtbewegungsrichtung durch die die Kühlstrecke, die Hauptglühstrecke und die Vorglühstrecke umschliessenden Kanalabschnitte und anschliessend gegebenenfalls noch durch einen die Zieheinrichtung umschliessenden Kanalabschnitt und wird dann als Schutzgas zur Schweissstation geleitet. Nach Verlassen der Kühlstrecke wird der weichgeglühte und mit einem Ziehölfilm gefettete neue Kupferrunddraht dann mittels einer Aufwickeleinrichtung mit einem prinzipiellen Aufbau wie dem der oben im Zusammenhang mit dem ersten Ausführungsbeispiel schon beschriebenen Aufwickeleinrichtung auf Spulen gewickelt und mit diesen dann der weiteren Nutzanwendung zugeleitet.

Abschliessend sei zur Definition der verwendeten Begriffe noch darauf hingewiesen, dass als « Drahtzentrum » die Linie, auf der bei einer Unterteilung des Drahtes quer zur Drahtlängsrichtung in dünne Scheiben die Schwerpunkte der einzelnen Scheiben liegen würden, und als « geringste äussere Abmessung des verformten und verunreinigten Kupferdrahtes » der geringste Abstand zweier Punkte an der Drahtoberfläche, deren geradlinige Verbindung durch das Drahtzentrum verläuft, bezeichnet sind.

## Patentansprüche

1. Verfahren zur mehrfachen Nutzung eines Kupferdrahtes, der in einer ersten Nutzanwendung als Elektrodendraht zum elektrischen Widerstandslängsnahtschweissen, insbesondere von verzinnten Blechen, verwendet und hierzu vor dieser ersten Nutzanwendung zu einem Draht mit von der Kreisform abweichender Querschnittsform, insbesondere zu einem Flachdraht, verformt und mit der Verformung verfestigt wird und der bei dieser ersten Nutzanwendung in seinen mit dem Schweissgut in Kontakt kommenden Bereichen durch von dem Schweissgut stammendes und während der Schweissung auf ihn übergehendes Material verunreinigt wird, dadurch gekennzeichnet, dass der verformte und verunreinigte Kupferdraht nach der ersten Nutzanwendung einer eine Vielzahl von Ziehstufen umfassenden Drahtzieheinrichtung zugeleitet und dort derart gezogen wird, dass sich die Abstände der vom Drahtzentrum am weitesten entfernten Randbereiche des Drahtes vom Drahtzentrum in sämtlichen Ziehstufen und die Abstände der dem Drahtzentrum am nächsten liegenden Randbereiche des Drahtes vom Drahtzentrum in mindestens einem Teil der Ziehstufen verringern und dass sich ferner die Abstände der vom Drahtzentrum am weitesten entfernten Randbereiche des Drahtes vom Drahtzentrum in den Ziehstufen sukzessive mindestens so weit verringern, dass sie kleiner als die Abstände der dem Drahtzentrum vor dem Ziehen am nächsten liegenden Randbereiche des Drahtes vom Drahtzentrum werden, und dass sich die Abstände der dem Drahtzentrum am nächsten liegenden Randbereiche des Drahtes vom Drahtzentrum in dem genannten Teil der Ziehstufen so weit verringern, dass sie nach Durchlaufen der letzten Ziehstufe ebensogross wie die Abstände der vorher am weitesten vom Drahtzentrum entfernten Randbereiche des Drahtes vom Drahtzentrum sind, so dass aus dem verformten und verunreinigten Kupferdraht in der Drahtzieheinrichtung ein neuer Kupferrunddraht mit kreisförmigem Querschnitt und kleinerem Durchmesser als der geringsten äusseren Abmessung des verformten und verunreinigten Kupferdrahtes gezogen wird, und dass dieser neue Kupferrunddraht einer weiteren Nutzanwendung zugeführt wird.

2. Verfahren nach Anspruch 1, dadurch gekennzeichnet, dass der in der Drahtzieheinrichtung gezogene neue Kupferrunddraht einer von der genannten ersten Nutzanwendung verschiedenen weiteren Nutzanwendung zugeführt wird.

3. Verfahren nach Anspruch 2, dadurch gekennzeichnet, dass die genannte von der ersten Nutzanwendung verschiedene weitere Nutzanwendung, der der in der Drahtzieheinrichtung gezogene neue Kupferrunddraht zugeführt wird, eine Daueranwendung, vorzugsweise als Signalleiter oder Wicklungsdraht, ist.

4. Verfahren nach einem der Ansprüche 1 bis 3, dadurch gekennzeichnet, dass der in der Drahtzieheinrichtung gezogene neue Kupferrunddraht vor der Zuführung zu der genannten weiteren Nutzanwendung mit einer isolierenden Hülle, vorzugsweise mit einer Lackierung, versehen wird.

5. Verfahren nach einem der Ansprüche 1 bis 4, dadurch gekennzeichnet, dass der in der Drahtzieheinrichtung gezogene neue Kupferrunddraht nach Verlassen der letzten Ziehstufe durch Erhitzung auf eine mindestens seiner Rekristallisationstemparatur entsprechende und vorzugsweise über derselben liegende Temperatur weichgeglüht wird.

6. Verfahren nach einem der Ansprüche 1 bis 5, dadurch gekennzeichnet, dass der Kupferdraht vor der ersten Nutzanwendung so weit verfestigt wird, dass seine Bruchdehnung nach der ersten Nutzanwendung noch unter 10 % liegt, und dass der nach der ersten Nutzanwendung verformte und verunreinigte Kupferdraht vor seiner Zuführung zur ersten Ziehstufe der Drahtzieheinrichtung durch Erhitzung auf eine mindestens seiner Rekristallisationstemperatur entsprechende und vorzugsweise über derselben liegende Temperatur weichgeglüht wird.

7. Verfahren nach einem der Ansprüche 1 bis 6, dadurch gekennzeichnet, dass eine Drahtzieheinrichtung verwendet wird, deren Verarbeitungskapazität pro Zeiteinheit ein Mehrfaches des Elektrodendrahtverbrauches pro Zeiteinheit von einer zu dem genannten elektrischen Widerstandslängsnahtschweissen verwendeten Schweissmaschine beträgt, und dass zur besseren Ausnutzung der Verarbeitungskapazität der Drahtzieheinrichtung die Elektrodendrähte von mehreren zu dem genannten elektrischen Widerstandslängsnahtschweissen verwendeten Schweissmaschinen nach ihrer Benutzung als Elektrodendrähte gesammelt und diese gesammelten, verformten und verunreinigten Kupferdrähte dann nacheinander der Drahtzieheinrichtung zugeleitet werden.

8. Verfahren nach Anspruch 7, dadurch gekennzeichnet, dass zum Sammeln eines Elektrodendrahtes nach seiner Benutzung in einer Schweissmaschine eine angetriebene Spule, vorzugsweise eine Scheibenspule, verwendet wird, auf die der Elektrodendraht lagenweise aufgebracht wird und deren Antrieb von der Schweissmaschine gesteuert wird und die vorzugsweise an der Schweissmaschine angeordnet wird.

9. Verfahren nach einem der Ansprüche 1 bis 8, dadurch gekennzeichnet, dass der Kupferdraht in der ersten Nutzanwendung zu einem Draht mit einer Querschnittsform verformt wird, bei der die Abstände der dem Drahtzentrum am nächsten liegenden Randbereiche des Drahtes vom Drahtzentrum weniger als das 0,7-fache der Abstände der vom Drahtzentrum am weitesten entfernten Randbereiche des Drahtes vom Drahtzentrum betragen, und dass nach der ersten Nutzanwendung der verformte und verunreinigte Kupferdraht in der Drahtzieheinrichtung derart gezogen wird, dass sich die Abstände der dem Drahtzentrum vor dem Ziehen am nächsten liegenden Randbereiche des Drahtes vom Drahtzentrum nur in der oder den letzten Ziehstufen verringern und sich demgemäss in der oder den ersten Ziehstufen nur die Abstände der vom Drahtzentrum am weitesten entfernten Randbereiche des Drahtes vom Drahtzentrum verringern, wobei mindestens in der bzw. den besagten letzten Ziehstufen, vorzugsweise jedoch in sämtlichen Ziehstufen, Ziehdüsen mit rotationssymmetrischen Ziehlöchern verwendet werden.

10. Verfahren nach Anspruch 9, dadurch gekennzeichnet, dass der Kupferdraht in der ersten Nutzanwendung zu einem Draht mit einer Querschnittsform verformt wird, bei der die Abstände der dem Drahtzentrum am nächsten liegenden Randbereiche des Drahtes vom Drahtzentrum vorzugsweise weniger als das 0,5-fache der Abstände der vom Drahtzentrum am weitesten entfernten Randbereiche des Drahtes vom Drahtzentrum betragen, und dass der nach der ersten Nutzanwendung verformte und verunreinigte Kupferdraht in der Drahtzieheinrichtung in mindestens einem Teil derjenigen Ziehstufen, in denen sich nur die Abstände der vom Drahtzentrum am weitesten entfernten Randbereiche des Drahtes vom Drahtzentrum verringern, durch in den betreffenden Ziehstufen vorgesehene rotationssymmetrische Ziehlöcher gezogen wird und in mindestens einem Teil dieser mit rotationssymmetrischen Ziehlöchern versehenen Ziehstufen, in denen sich nur die Abstände der vom Drahtzentrum am weitesten entfernten Randbereiche des Drahtes vom Drahtzentrum verringern, in den Ziehlöchern durch vom Einlauf derselben her in dieselben hineinragende Führungsmittel derart geführt wird, dass ein Auskrümmen des Drahtes in Richtung eines seiner dem Drahtzentrum am nächsten liegenden Randbereiche während des Ziehvorganges vermieden wird.

11. Verfahren nach Anspruch 10, dadurch gekennzeichnet, dass als Führungsmittel zum Führen des Drahtes im Ziehloch eine an der Einlaufseite der Ziehdüse angeordnete Platte verwendet wird, die mit einem Schlitz sowie mit zwei auf der der Ziehdüse zugewandten Plattenseite angeordneten, in das Ziehloch hineinragenden nasenartigen Vorsprüngen versehen ist, die sich mit voneinander abgewandten Nasenrücken gegenüberstehen und deren Nasenrücken an der Wand des rotationssymmetrischen Ziehloches anliegen und deren einander zugewandten Wandflächen sich, vorzugsweise knickfrei, an die beiden den Schlitz begrenzenden Wände anschliessen und mindestens in dem oder den Bereichen des Ziehloches, in dem bzw. denen sich der Lochquerschnitt des Ziehloches von der Einlaufseite zur Auslaufseite der Ziehdüse hin verringert, einen wenigstens annähernd dem Abstand der dem Drahtzentrum am nächsten liegenden Randbereiche des Drahtes voneinander entsprechenden Abstand haben, so dass der Schlitz zusammen mit den einander zugewandten Wandflächen der nasenartigen Vorsprünge und den nicht von diesen Vorsprüngen abgedeckten Wandflächen des Ziehloches einen Ziehkanal bilden, in dem sich beim Durchziehen des Drahtes nur noch die Abstände der vom Drahtzentrum am weitesten entfernten, mit den nicht von den Vorsprüngen abgedeckten Wandflächen des Ziehloches in Kontakt kommenden Randbereiche des Drahtes vom Drahtzentrum verringern und in dem durch die einander zugewandten Wandflächen der nasenartigen Vorsprünge ein Auskrümmen des Drahtes in Richtung eines seiner dem Drahtzentrum am nächsten liegenden Randbereiche des Drahtes verhindert wird.

12. Verfahren nach Anspruch 11, dadurch gekennzeichnet, dass zur Befestigung von Ziehdüse und Platte Befestigungsmittel verwendet werden, mit denen Ziehdüse und Platte relativ zueinander drehbar und in verschiedenen Winkellagen fixierbar sind, so dass die Ziehdüse durch Fixierung von Ziehdüse und Platte relativ zueinander in n verschiedenen gegeneinander um je 180°/n versetzten Winkellagen n-fach ausnutzbar ist, wobei n eine ganze Zahl ist, die grösser als 1 und kleiner oder höchstens gleich 90°/arc sin a/d ist, und wobei a gleich dem Abstand der dem Drahtzentrum am nächsten liegenden Randbereiche des Drahtes voneinander und d gleich dem Durchmesser des Ziehloches an der Stelle seines geringsten Lochquerschnittes ist.

13. Verfahren nach Anspruch 11 oder 12, dadurch gekennzeichnet, dass als mit Schlitz und nasenartigen Vorsprüngen versehene Platte eine Platte verwendet wird, bei der mindestens ihre mit dem durchlaufenden Draht in Kontakt kommenden Wandteile, vorzugsweise wenigstens die nasenartigen Vorsprünge und die sich daran anschliessenden Wandteile der den Schlitz begrenzenden Wände, aus Hartmetall bestehen.

14. Einrichtung zur Durchführung des Verfahrens nach einem der Ansprüche 1 bis 13, gekennzeichnet durch eine Schweissmaschine zum elektrischen Widerstandslängsnahtschweissen mit Hilfe von Drahtelektroden und eine in die Schweissmaschine integrierte Drahtzieheinrichtung zum Ziehen des bei dem Widerstandslängsnahtschweissen in Form von verformtem und verunreinigtem Kupferdraht anfallenden benutzten Elektrodendrahtes zu neuem Kupferrunddraht mit kreisförmigem Querschnitt und kleinerem Durchmesser als der geringsten äusseren Abmessung des verformten und verunreinigten Kupferdrahtes.

15. Anlage zur Durchführung des Verfahrens nach einem der Ansprüche 1 bis 13, gekennzeichnet durch eine Mehrzahl von Schweissmaschinen zum elektrischen Widerstandslängsnahtschweissen mit Hilfe von Drahtelektroden sowie Mittel zum Sammeln des in Form von verformtem und verunreinigtem Kupferdraht anfallenden benutzten Elektrodendrahtes an jeder der Schweissmaschinen und eine separate Drahtziehmaschine mit einer mindestens dem gesamten Elektrodendrahtverbrauch von allen diesen Schweissmaschinen pro Zeiteinheit entsprechenden Verarbeitungskapazität pro Zeiteinheit zum Ziehen der gesammelten benutzten Elektrodendrähte von allen diesen Schweissmaschinen zu neuem Kupferdraht mit kreisförmigem Querschnitt und kleinerem Durchmesser als der geringsten äusseren Abmessung des verformten verunreinigten Kupferdrahtes.

16. Anlage nach Anspruch 15, dadurch gekennzeichnet, dass die Mittel zum Sammeln des benutzten Elektrodendrahtes mindestens eine angetriebene Spule, vorzugsweise eine Scheibenspule, an jeder der Schweissmaschinen zum Aufspulen des benutzten Elektrodendrahtes, Mittel zum Antrieb der Spule und Steuermittel zur Steuerung dieses Antriebs sowie vorzugsweise Mittel zur lagenweisen Aufbringung des benutzten Elektrodendrahtes auf die Spule umfassen.

## Claims

1. A method for the multiple use of a copper wire which is used in a first practical application as electrode wire for the electrical resistance longitudinal seam welding of tinned metal sheet in particular, and for this purpose is formed, before this first practical application, into a wire with a cross-sectional shape differing from the circular shape, particularly into a flat wire and is hardened during the forming, and which is contaminated, during this first application, in its regions coming into contact with the work being welded, by material originating from the work being welded and transferred to it during the welding, characterised in that the deformed and contaminated copper wire is fed, after the first useful application, to a wire drawing device comprising a plurality of drawing stages and is there drawn in such a manner that the distances from the wire centre of the peripheral regions of the wire furthest away from the wire centre are reduced in all drawing stages and the distances from the wire centre of the peripheral regions of the wire nearest to the wire centre are reduced in at least some of the drawing stages, and that furthermore the distances from the wire centre of the peripheral regions of the wire furthest away from the wire centre are reduced successively in the drawing stages at least to such an extent that they become shorter than the distances from the wire centre of the peripheral regions of the wire situated closest to the wire centre before drawing, and that the distances from the wire centre of the peripheral regions of the wire nearest to the wire centre are reduced in said some of the drawing stages to such an extent that, after passing through the last drawing stage, they are as great as the distances from the wire centre of the peripheral regions of the wire previously furthest away from the wire centre, so that a new round copper wire with a circular cross-section and a smaller diameter than the smallest external dimension of the deformed and contaminated copper wire is drawn from the deformed and contaminated copper wire, in the wire drawing device, and that this new round copper wire is supplied for a further practical application.

2. A method according to Claim 1, characterised in that the new round copper wire drawn in the wire drawing device is supplied for a further practical application different from the said first practical application.

3. A method according to Claim 2, characterised in that said further practical application which is different from the first practical application and for which the new round copper wire drawn in the wire drawing device is supplied, is a permanent application, preferably as a signal conductor or a winding wire.

4. A method according to any one of the Claims 1 to 3, characterised in that, before being supplied for the said further practical application, the new round copper wire drawn in the wire drawing device is provided with an insulating sheath, preferably with a coat of lacquer.

5. A method according to any one of the Claims 1 to 4, characterised in that, after leaving the last drawing stage, the new round copper wire drawn in the wire drawing device is soft-annealed by heating to a temperature at least corresponding to its recrystallization temperature and preferably above that.

6. A method according to any one of Claims 1 to 5, characterised in that, before the first practical application, the copper wire is hardened to such an extent that, after the first practical application, its elongation at fracture is still under 10 %, and that the copper wire which is deformed and contaminated after the first practical application is soft-annealed by heating to a temperature at least corresponding to its recrystallization temperature and preferably above that, before being fed to the first drawing stage.

7. A method according to any one of Claims 1 to 6, characterised in that a wire drawing device is used, the processing capacity of which, per unit of time, is a multiple of the electrode-wire consumption per unit of time of a welding machine used for the said electrical resistance longitudinal seam welding, and that, for the better utilization of the processing capacity of the wire drawing device, the electrode wires from a plurality of welding machines used for the said electrical resistance longitudinal seam welding are collected after their use as electrode wires and these collected, deformed and contaminated copper wires are then fed successively to the wire drawing device.

8. A method according to Claim 7, characterised in that in order to collect an electrode wire after its use in a welding machine, a driven spool, preferably a flanged spool, is used to which the electrode wire is applied in layers and the drive of which is controlled by the welding machine and which is preferably disposed on the welding machine.

9. A method according to any one of Claims 1 to 8, characterised in that, in the first practical application, the copper wire is deformed into a wire with a crosssectional shape wherein the distrances from the wire centre of the peripheral regions of the wire nearest to the wire centre are less than 0.7 times the distances from the wire centre of the peripheral regions of the wire furthest awag from the wire centre, and that, after the first practical application, the deformed and contaminated copper wire is drawn in the wire drawing device in such a manner that the distances from the wire centre of the peripheral regions of the wire nearest to the wire centre before the drawing are reduced only in the last drawing stage or stages and accordingly only the distances from the wire centre of the peripheral regions of the wire furthest away from the wire centre are reduced in the first drawing stage or stages, and drawing plates with rotationally symmetrical drawing holes are used at least in the said last drawing stage or stages, but preferably in all the drawing stages.

10. A method according to Claim 9, characterised in that, in the first practical application, the copper wire is deformed into a wire with a cross-sectional shape wherein the distances from the wire centre of the peripheral regions of the wire nearest to the wire centre are preferably less than 0.5 times the distances from the wire centre of the peripheral regions of the wire furthest away from the wire centre and that the copper wire, which is deformed and contaminated after the first practical application, is drawn in the wire drawing device, in at least some of those drawing stages in which only the distances from the wire centre of the peripheral regions of the wire furthest away from the wire centre are reduced, through rotationally symmetrical drawing holes provided in the drawing stages in question and, in at least some of these drawing stages provided with rotationally symmetrical drawing holes, in which stages only the distances from the wire centre of the peripheral regions of the wire furthest away from the wire centre are reduced, it is guided in the drawing holes, by guide means projecting into them from their inlets, in such a manner that bending of the wire outwards in the direction of one of its peripheral regions nearest to the wire centre is avoided during the drawing operation.

11. A method according to Claim 10, characterised in that a plate, which is disposed at the inlet side of the drawing plate and which is provided with a slit and with two nose-like projections disposed at the side of the plate adjacent to the drawing plate and projecting into the drawing hole, is provided as a guide means for guiding the wire in the drawing hole, which projections are situated opposite one another with the backs of their noses remote from one another and the backs of their noses bear against the wall of the axially symmetrical drawing hole and their adjacent wall faces follow, preferably without a break, on the two walls bounding the slit and, at least in the region or regions of the drawing hole in which the hole cross-section of the drawing hole decreases from the inlet side to the outlet side of the drawing plate, they have a distance apart corresponding at least substantially to the distance apart of the marginal regions of the wire nearest to the wire centre so that the slit, together with the adjacent wall faces of the nose-like projections and the wall faces of the drawing hole which are not covered by these projections, forms a drawing channel in which, when the wire is drawn through, only the distances from the wire centre of the peripheral regions of the wire which are furthest away from the wire centre and which come into contact with the wall faces of the drawing hole not covered by the projections are reduced, and in which bending out of the wire in the direction of one of its peripheral regions nearest to the wire centre is prevented by the adjacent wall faces of the nose-like projections.

12. A method according to Claim 11, characterised in that in order to secure drawing plate and guide plate, securing means are used whereby drawing plate and guide plate are rotatable relative to one another and can be located in various angular positions so that, by locating drawing plate and guide plate relative to one another in n different angular positions each offset from one another by 180°/n, the drawing plate can be fully used n times, n being a whole number which is greater than 1 and less than or at most equal to 90°/arc sin a/d, and a being equal to the distance apart of the peripheral regions of the wire nearest the wire centre and d being equal to the diameter of the drawing hole at the position of its smallest hole cross-section.

13. A method according to Claim 11 or 12, characterised in that a plate wherein at least its wall portions coming into contact with the wire passing through and preferably at least the nose-like projections and the adjacent wall portions of the walls bounding the slit consist of hard metal is used as a plate provided with a slit and nose-like projections.

14. A device for carrying out the method according to any one of Claims 1 to 13, characterised by a welding machine for electrical resistance longitudinal seam welding with the aid of wire electrodes and a wire drawing device, integrated in the welding machine, for drawing the used electrode wire produced in the form of deformed and contaminated copper wire during the resistance longitudinal seam welding into new round copper wire with a circular cross-section and a smaller diameter than the smallest external dimension of the deformed and contaminated copper wire.

15. An installation for carrying out the method according to any one of Claims 1 to 13, characterised by a plurality of welding machines for electrical resistance longitudinal seam welding with the aid of wire electrodes and means for collecting the used electrode wire produced in the form of deformed and contaminated copper wire, at each of the welding machines, and a separate wire drawing machine having a processing capacity per unit of time corresponding at least to the total electrode-wire consumption of all these welding machines per unit of time for drawing the collected used electrode wires from all these welding machines into new copper wire with a circular cross-section and a smaller diameter than the smallest external dimension of the deformed contaminated copper wire.

16. An installation according to Claim 15, characterised in that the means for collecting the used electrode wire comprise at least one driven spool, preferably a flanged spool, at each of the welding machines to wind up the used electrode wire, means for driving the spool, and control means to control this drive, and preferably means for applying the used electrode wire to the spool in layers.

**Revendications**

1. Procédé d'utilisation multiple d'un fil de cuivre, qu'on utilise, lors d'une première utilisation, en tant que fil-électrode pour réaliser le soudage électrique par résistance de joints longitudinaux, notamment pour réunir des tôles étamées, et qu'on déforme à cet effet, avant cette première utilisation, pour obtenir un fil possédant une forme en coupe transversale s'écartant de la forme circulaire, notamment un fil plat, et qui est rigidifié par la déformation, et est rendu impur, lors de cette première utilisation, au niveau de ses zones venant en contact avec l'article à souder, par un matériau provenant de cet article à souder et recouvrant le fil pendant le soudage, caractérisé en ce qu'après la première utilisation, on envoie le fil de cuivre déformé et rendu impur, à un dispositif d'étirage du fil comportant une multiplicité d'étage d'étirage et on l'étire de telle façon que les distances des zones marginales du fil, les plus éloignées du centre du fil, par rapport à ce centre diminuent dans tous les étages d'étirage et les distances des zones marginales du fil, les plus proches du centre du fil, par rapport à ce centre diminuent dans au moins une partie des étages d'étirage et qu'en outre les distances des zones marginales du fil, les plus éloignées du centre du fil, par rapport à ce centre diminuent successivement dans les étages d'étirage au moins de manière à devenir inférieures aux distances des zones marginales du fil, les plus proches du centre du fil avant l'étirage, par rapport à ce centre, et que les distances des zones marginales du fil, les plus proches du centre du fil, par rapport à ce centre diminuent dans ladite partie des étages d'étirage au point qu'après la traversée du dernier étage d'étirage, elles possèdent la même valeur que les distances des zones marginales du fil, les plus éloignées du centre du fil, par rapport à ce centre de sorte qu'à partir du fil de cuivre déformé et rendu impur on étire, dans le dispositif d'étirage du fil, un nouveau fil de cuivre rond possédant une section transversale circulaire et un diamètre inférieur à la dimension extérieure la plus faible du fil de cuivre déformé impur, et que ce nouveau fil de cuivre rond fait l'objet d'une nouvelle utilisation.

2. Procédé selon la revendication 1, caractérisé en ce que le nouveau fil de cuivre rond étiré dans le dispositif d'étirage du fil fait l'objet d'une nouvelle utilisation différente de ladite première utilisation.

3. Procédé selon la revendication 2, caractérisé en ce que ladite nouvelle utilisation, qui est différente de la première utilisation et dans laquelle on utilise le nouveau fil de cuivre rond étiré dans le dispositif d'étirage du fil, est une utilisation permanente du fil, de préférence en tant que conducteur de transmission de signaux ou fil de bobinage.

4. Procédé selon l'une des revendications 1 à 3, caractérisé en ce qu'avant ladite nouvelle utilisation du nouveau fil de cuivre rond étiré dans le dispositif d'étirage du fil, on lui applique une gaine isolante, de préférence au moyen d'un dépôt d'une couche de laque.

5. Procédé selon l'une des revendications 1 à 4, caractérisé par le fait qu'on soumet à un recuit le nouveau fil de cuivre rond cylindrique, étiré dans le dispositif d'étirage du fil, après son départ du dernier étage d'étirage, en le chauffant à une température correspondant au minimum à sa température de recristallisation et de préférence supérieure à cette température.

6. Procédé selon l'une des revendications 1 à 5, caractérisé en ce qu'on réalise une consolidation du fil de cuivre avant la première utilisation de manière que son allongement à la rupture après la première utilisation soit encore inférieur à 10 %, et qu'on soumet le fil de cuivre déformé et rendu impur après la première utilisation, avant son envoi au premier étage d'étirage du dispositif d'étirage du fil, à un recuit en le chauffant à une température correspondant au minimum à sa température de recristallisation et supérieure de préférence à cette température.

7. Procédé selon l'une des revendications 1 à 6, caractérisé en ce qu'on utilise un dispositif d'étirage du fil, dont la capacité de traitement par unité de temps est égale à un multiple de la consommation du fil-électrode par unité de temps d'une machine à souder utilisée pour réaliser ledit soudage électrique par résistance de joints longitudinaux, et que pour mieux mettre à profit la capacité de traitement du dispositif d'étirage du fil, on rassemble les fils-électrodes de plusieurs machines à souder utilisées pour réaliser ledit soudage électrique par résistance de cordons longitudinaux, conformément à leur utilisation en tant que fils-électrodes et qu'on envoie alors successivement ces fils de cuivre assemblés, déformés et rendus impurs, au dispositif d'étirage du fil.

8. Procédé selon la revendication 7, caractérisé en ce que pour collecter un fil-électrode après son utilisation dans une machine à souder, on utilise une bobine entraînée de préférence une bobine plate, sur laquelle on dépose le fil-électrode en couches et dont l'entraînement est commandé par la machine à souder et qui est installée de préférence sur la machine à souder.

9. Procédé selon l'une des revendications 1 à 8, caractérisé en ce qu'on déforme le fil de cuivre dans la première utilisation pour former un fil possédant une forme en coupe transversale, conformément à laquelle les distances des zones marginales du fil, les plus proches du centre du fil, par rapport à ce centre sont inférieures à 0,7 fois les distances des zones marginales du fil, les plus éloignées du centre du fil, par rapport à ce centre, et qu'après la première utilisation, on étire le fil déformé et rendu impur dans le dispositif d'étirage du fil de manière que les distances des zones marginales du fil, les plus proches du centre du fil avant l'étirage, par rapport à ce centre diminuent uniquement dans le ou les derniers étages d'étirage et que par conséquent seules les distances des zones marginales du fil, les plus éloignées du centre du fil, par rapport à ce centre diminuent dans le ou les premiers étages d'étirage, auquel cas on utilise des filières possédant des trous d'étirage à symétrie de révolution au moins dans le ou lesdits derniers étages d'étirage, mais de préférence dans tous les étages d'étirage.

10. Procédé selon la revendication 9, caractérisé en ce qu'on déforme le fil de cuivre lors de la première utilisation pour obtenir un fil possédant une forme en coupe transversale, conformément à laquelle les distances des zones marginales du fil, les plus proches du centre du fil, par rapport à ce centre sont de préférence inférieures à 0,5 fois les distances des zones marginales du fil, les plus éloignées du centre du fil, par rapport à ce centre, et qu'on étire le fil de cuivre déformé et impur après la première utilisation, dans le dispositif d'étirage du fil, dans au moins une partie des étages d'étirage, dans lesquels seules les distances des zones marginales du fil, les plus éloignées du centre du fil, par rapport à ce dernier diminuent, au moyen de trous d'étirage à symétrie de révolution prévus dans les étages d'étirage considérés, et qu'on le fait passer dans les trous d'étirage dans des moyens de guidage pénétrant dans ces trous à partir de leur entrée, dans au moins une partie de ces étages d'étirage, qui sont équipés de trous d'étirage à symétrie de révolution et dans lesquels seules les distances des zones marginales du fil, les plus éloignées du centre du fil, par rapport à ce centre diminuent, de telle sorte qu'un cintrage du fil en direction de l'une de ces zones marginales les plus proches du centre du fil, est évité pendant l'opération d'étirage.

11. Procédé selon la revendication 10, caractérisé en ce qu'on utilise comme moyens de guidage servant à guider le fil dans le trou d'étirage, une plaque qui est disposée sur le côté entrée de la filière et comporte une fente ainsi que deux parties saillantes en forme de becs qui sont disposées sur la face de la plaque tournée vers la filière, pénètrent dans le trou d'étirage et qui se font face par leurs dos tournés à l'opposé l'un de l'autre et dont les dos s'appliquent contre la paroi du trou d'étirage à symétrie de révolution et dont les surfaces des parois tournées l'une vers l'autre se raccordent, de préférence sans coude, aux deux parois limitant la fente et sont séparées, au moins dans la ou les zones du trou d'étirage, dans la ou lesquelles la section transversale du trou d'étirage diminue depuis le côté entrée en direction du côté sortie de la filière, par une distance correspondant au moins approximativement à la distance des zones marginales du fil, les plus proches du centre du fil, de sorte que la fente forme avec les surfaces, tournées l'une vers l'autre, des parties saillantes en forme de becs et avec les surfaces des parois du trou d'étirage, non recouvertes par ces parties saillantes, un canal d'étirage dans lequel, lors de l'étirage du fil, seules les distances des zones marginales du fil, qui sont les plus éloignées du centre du fil et viennent en contact avec les surfaces des parois du trou d'étirage, non recouvertes par les parties saillantes, par rapport au centre du fil diminuent, et dans lequel les surfaces, tournées l'une vers l'autre, des parois des parties saillantes en forme de becs empêchent un cintrage du fil en direction de l'une de ses zones marginales les plus rapprochées du centre du fil.

12. Procédé selon la revendication 11, caractérisé en ce que, pour la fixation de la filière et de la plaque, on utilise des moyens de fixation, à l'aide desquels la filière et la plaque peuvent tourner l'une par rapport à l'autre et peuvent être fixées dans différentes positions angulaires de sorte que la filière peut être utilisée n fois par fixation de la filière et de la plaque l'une par rapport à l'autre dans n positions angulaires décalées l'une par rapport à l'autre respectivement de 180°/n, n étant un nombre entier supérieur à 1 et inférieur ou tout au plus égal à 90°/arc sin a/d, et a représentant la distance entre les zones marginales du fil les plus proches du centre du fil et d le diamètre du trou d'étirage à l'emplacement de sa section transversale la plus faible.

13. Procédé selon la revendication 11 ou 12, caractérisé en ce qu'on utilise, comme plaque munie d'une fente et de parties saillantes en forme de becs, une plaque dont au moins les éléments de paroi, qui viennent en contact avec le fil traversant, de préférence au moins les parties saillantes en forme de becs et les éléments, qui s'y raccordent des parois limitant la fente, sont constitués en un métal dur.

14. Dispositif pour la mise en œuvre du procédé selon l'une des revendications 1 à 13, caractérisé par une machine de soudage servant à réaliser le soudage électrique par résistances de joints longitudinaux à l'aide d'électrodes en fil, et par un dispositif d'étirage du fil intégré dans la machine de soudage et servant à étirer le fil-électrode utilisé et obtenu lors du soudage par résistance de joints longitudinaux sous la forme d'un fil de cuivre déformé et rendu impur, de manière à former un nouveau fil de cuivre rond possédant une section transversale circulaire et un diamètre inférieur à la dimension extérieure la plus faible du fil de cuivre déformé rendu impur.

15. Installation pour la mise en œuvre du procédé selon l'une des revendications 1 à 13, caractérisée par une multiplicité de machines à souder servant à réaliser le soudage électrique par résistance de joints longitudinaux à l'aide de fils-électrodes ainsi que par des moyens pour collecter le fil-électrode utilisé, obtenu sous la forme d'un fil de cuivre déformé et rendu impur, dans chacune des machines à souder, et par une machine séparée d'étirage du fil possédant une capacité de traitement par unité de temps correspondant au moins à la consommation globale des fils-électrodes de toutes les machines à souder par unité de temps, pour réaliser l'étirage des fils-électrodes utilisés et rassemblés provenant de toutes ces machines à souder pour former un nouveau fil de cuivre possédant une section transversale circulaire et un diamètre inférieur à la dimension extérieure la plus faible du fil de cuivre déformé et rendu impur.

16. Installation suivant la revendication 15, caractérisée en ce que les moyens pour collecter le fil-électrode utilisé comprennent au moins une bobine entraînée, de préférence une bobine plate, prévue dans chacune des machines à souder et servant à enrouler le fil-électrode utilisé, des moyens pour entraîner la bobine et des moyens de commande servant à commander cet entraînement ainsi que des moyens permettant de déposer en couches le fil-électrode utilisé sur la bobine.